# EUROPEAN PATENT APPLICATION

(11) **EP 2 899 688 A1**
(43) Date of publication of application: **29.07.2015**
(21) Application number: 13839632.0
(22) Date of filing: 09.09.2013
(51) Int. Cl.: G06T 5/00, H04N 1/407, H04N 5/243

(54) **IMAGE PROCESSING DEVICE, IMAGE DISPLAY DEVICE, IMAGE CAPTURE DEVICE, IMAGE PRINTING DEVICE, GRADATION CONVERSION METHOD, AND PROGRAM**

(30) Priority: 20.09.2012 JP 2012206866; 25.09.2012 JP 2012211022
(71) Applicant: Sharp Kabushiki Kaisha, Osaka-shi, Osaka 545-8522 (JP)
(72) Inventor: TOKUI, Kei, Osaka 545-8522 (JP); OMORI, Keisuke, Osaka 545-8522 (JP)
(74) Representative: Müller Hoffmann & Partner
(86) International application number: PCT/JP2013/074228
(87) International publication number: WO 2014/045915

(57) **Abstract**

An image processing device according to an aspect of the present invention includes a first illumination light distribution calculation unit that calculates an illumination light distribution on the basis of an input image, a first gradation conversion unit that performs gradation conversion by using the illumination light distribution calculated by the first illumination light distribution calculation unit, a second illumination light distribution calculation unit that calculates an illumination light distribution of an image having undergone the gradation conversion in the first gradation conversion unit, and a second gradation conversion unit that performs gradation conversion by using the second illumination light distribution calculation unit, in which a reference image region of the first illumination light distribution calculation unit is larger than a reference image region of the second illumination light distribution calculation unit.

## Description

### Technical Field

The present invention relates to an image processing device, an image display device, an image capture device, an image printing device, a gradation conversion method, and a program, and particularly to an image processing technique for improving visibility of an image.

This application is based upon and claims the benefit of priority from Japanese Patent Application No. 2012-206866, filed September 20, 2012 and Japanese Patent Application No. 2012-211022, filed September 25, 2012, the entire contents of which are incorporated herein by reference.

### Background Art

As a process of performing contrast emphasis of an image or performing dynamic range compression, there is a gradation conversion technique. The contrast emphasis is a process of improving the contrast of the entire image by performing gradation conversion so that a brightness of a pixel with a higher brightness is increased, and a brightness of a pixel with a lower brightness is reduced. In a case of performing the contrast emphasis, generally, a look-up table (LUT) is provided, and the contrast emphasis is realized by correlating an input gradation value with an output gradation value.

The dynamic range compression is a process of performing gradation conversion so that a gap between the maximum value and the minimum value of a brightness of an image is reduced. Also in a case of performing the dynamic range compression, a gradation value of a high dynamic range (HDR) image is used as an input gradation value, and the dynamic range compression is realized by proving an LUT which has a gradation value having undergone the dynamic range compression as an output gradation value. The HDR image is an image which has a dynamic range wider than a standard dynamic range in which an image can be displayed with a typical monitor.

In a case where an input image is not present in an HDR image, there is an effect of improving visibility of a dark region by compressing gradations of a bright region.

However, in a case of using the above contrast emphasis process, gradations of the dark region and the bright region may be saturated. In addition, in a case of improving the dark region through the dynamic range compression, gradations of the bright region may be saturated.

Therefore, as a method for improving visibility of the dark region while reducing saturation of the bright region, PTL 1 discloses a method in which a luminance distribution is calculated, and gradation conversion is performed for each pixel.

According to the invention related to PTL 1, luminance values of an input image are averaged by using an averaging filter, and a correction gain is calculated on the basis of average luminance of focused pixel in an image process. In this case, a relationship between the average luminance and the correction gain is a monotonous decrease relationship. According to the invention related to PTL 1, the gradation conversion is performed on the basis of average luminance of each pixel and peripheral pixels so that correction gains of each pixel and the peripheral pixels come close to each other, and thus contrast can be maintained. The saturation of the bright region is reduced, and the visibility of the dark region is improved by reducing a correction gain of a bright region gradation and increasing a correction gain of a dark region gradation.

In recent years, television receivers with large-sized screens have been commercialized. Since power consumption increases due to the large-sized screen, power consumption is expected to be reduced. In addition, it is also important to reduce power consumption in order to increase the time to supply power accumulated in a battery in small portable terminal apparatuses including so-called tablet terminals or smartphones.

PTL 2 discloses that a luminance signal component is emphasized so that a light amount of a backlight is reduced without degrading apparent brightness of a screen of an image display device, and thus power consumption of the image display device is reduced.

### Citation List

### Patent Literature

PTL 1: Japanese Unexamined Patent Application Publication No. 2008-72450
PTL 2: Japanese Unexamined Patent Application Publication No. 2004-246099

### Summary of Invention

### Technical Problem

In the method related to PTL 1, the brightness of the dark region is increased in order to improve the visibility of the dark region while maintaining local contrast with the peripheral pixels. For this reason, a contrast feeling of the entire image may deteriorate. This is because the brightness of the dark region is increased, and thus a distribution of light and shade is decreased when the entire image is viewed. Here, the "contrast feeling" is a subjective feeling regarding contrast which a person observing an image actually receives the image, such as a global light and shade difference of the entire image, distributions of a bright portion and a dark portion in an image, and distributions of light and shade in a target subject.

If the method related to PTL 1 is performed on an originally bright image, the brightness of the bright region is slightly improved, and thus the contrast feeling of the entire image is reduced without improving the visibility.

In the image display method disclosed in PTL 2, power consumption can be reduced, but contrast of an image may be reduced, and thus visibility may deteriorate.

Therefore, the present invention provides an image processing device, an image display device, an image capture device, an image printing device, a gradation conversion method, and a program, capable of generating an image of which a contrast feeling is improved and the visibility is increased. Solution to Problem

According to an aspect of the present invention, there is provided an image processing device including a first illumination light distribution calculation unit that calculates a brightness of each pixel of an input image in a first region which is a predetermined region centering on the pixel so as to calculate a first illumination light distribution indicating a distribution of illumination light intensities of the input image; a first correction coefficient calculation unit that calculates a first correction coefficient which is a coefficient which monotonously decreases relative to the illumination light intensity in a case where the illumination light intensity is equal to or higher than a predetermined threshold value, for each pixel of the input image, on the basis of the first illumination light distribution; a first gradation conversion unit that performs gradation conversion on the input image by converting a gradation value of each pixel of the input image by using the first correction coefficient; a second illumination light distribution calculation unit that calculates a brightness of each pixel of an image having undergone the gradation conversion in the first gradation conversion unit in a second region smaller than the first region, centering on the pixel, so as to calculate a second illumination light distribution indicating a distribution of illumination light intensities of the input image; a second correction coefficient calculation unit that calculates a second correction coefficient which is a coefficient which monotonously increases relative to the illumination light intensity, for each pixel of the image having undergone the gradation conversion in the first gradation conversion unit, on the basis of the second illumination light distribution; and a second gradation conversion unit that performs gradation conversion on the image having undergone the gradation conversion in the first gradation conversion unit by converting a gradation value of each pixel of the image having undergone the gradation conversion in the first gradation conversion unit by using the second correction coefficient.

In the image processing device, the first correction coefficient calculation unit may calculate the first correction coefficient which is a coefficient which monotonously decreases relative to the illumination light intensity in a case where the illumination light intensity is equal to or higher than the predetermined threshold value and which monotonously increases relative to the illumination light intensity in a case where the illumination light intensity is lower than the predetermined threshold value, for each pixel of the input image, on the basis of the first illumination light distribution.

In the image processing device, the first correction coefficient calculation unit and the second correction coefficient calculation unit may respectively calculate the first correction coefficient and the second correction coefficient such that an average value of gradations of an output image is greater than an average value of gradations of the input image.

In the image processing device, the first illumination light distribution calculation unit may calculate a brightness of each pixel of an input image in a plurality of first regions larger than the second region, centering on the pixel, so as to calculate a plurality of first illumination light distributions, and the first correction coefficient calculation unit may calculate the first correction coefficient, for each pixel of the input image, on the basis of the plurality of first illumination light distributions. In addition, the second illumination light distribution calculation unit may calculate a brightness of each pixel of an image having undergone the gradation conversion in the first gradation conversion unit in a plurality of second regions smaller than the first region, centering on the pixel, so as to calculate a plurality of second illumination light distributions, and the second correction coefficient calculation unit may calculate the second correction coefficient, for each pixel of the image having undergone the gradation conversion in the first gradation conversion unit, on the basis of the plurality of second illumination light distributions.

In the image processing device, the first correction coefficient calculation unit may calculate the first correction coefficient such that the first correction coefficient for a pixel of which the illumination light intensity is the maximum becomes 1. In addition, the second correction coefficient calculation unit may calculate the second correction coefficient such that the second correction coefficient for a pixel of which the illumination light intensity is the maximum becomes 1.

The image processing device may further include a calculation method storage unit that stores a plurality of calculation methods of the first correction coefficient and a plurality of calculation methods of the second correction coefficient; and a calculation method selection unit that selects a single calculation method of the first correction coefficient and a single calculation method of the second correction coefficient among the calculation methods stored in the calculation method storage unit. In this case, the first correction coefficient calculation unit may calculate the first correction coefficient by using the calculation method of the first correction coefficient selected by the calculation method selection unit. In addition, the second correction coefficient calculation unit may calculate the second correction coefficient by using the calculation method of the second correction coefficient selected by the calculation method selection unit.

In the image processing device, the calculation method selection unit may select a single calculation method of the first correction coefficient and a single calculation method of the second correction coefficient among the calculation methods stored in the calculation method storage unit, in response to an instruction from a user.

The image processing device may further include an image analysis unit that analyzes the input image or the image having undergone the gradation conversion in the first gradation conversion unit. In this case, the calculation method selection unit selects a single calculation method of the first correction coefficient and a single calculation method of the second correction coefficient among the calculation methods stored in the calculation method storage unit, on the basis of an analysis result from the image analysis unit.

According to another aspect of the present invention, there is provided an image display device including the image processing device; and an image display unit that displays an image having undergone the gradation conversion in the second gradation conversion unit.

In the image display device, the first correction coefficient calculation unit and the second correction coefficient calculation unit may respectively calculate the first correction coefficient and the second correction coefficient on the basis of a brightness of the image display unit.

In the image display device, the image display unit may include an illumination portion that emits light. In this case, the first correction coefficient calculation unit and the second correction coefficient calculation unit may respectively calculate the first correction coefficient and the second correction coefficient such that a product of the first correction coefficient and the second correction coefficient increases according to a decrease in an output coefficient, the output coefficient being a ratio of an amount of light emitted by the illumination portion to the maximum amount of light which can be emitted by the illumination portion.

In the image display device, the first correction coefficient calculation unit and the second correction coefficient calculation unit may respectively calculate the first correction coefficient and the second correction coefficient such that the output coefficient and a product of the first correction coefficient and the second correction coefficient become 1 or become greater than 1.

The image display device may include an image analysis unit that calculates statistics related to gradation values of the input image; and an illumination device control unit that calculates the output coefficient on the basis of the statistics calculated by the image analysis unit.

In the image display device, the first correction coefficient calculation unit and the second correction coefficient calculation unit may respectively calculate the first correction coefficient and the second correction coefficient on the basis of an output coefficient which is calculated as the output coefficient in each of a plurality of partial regions into which a display region for displaying an image on the image display unit is divided.

The image display device may further include an image correction unit that stores in advance a correction coefficient indicating a relationship between a luminance for each light source corresponding to the partial region and a gradation value, for each pixel, and corrects the gradation value having undergone the gradation conversion in the second gradation conversion unit on the basis of the correction coefficient.

According to still another aspect of the present invention, there is provided an image capture device including the image processing device; and an imaging element that captures the input image.

According to still another aspect, there is provided an image printing device including the image processing device; and an image printing unit that prints the image having undergone the gradation conversion in the second gradation conversion unit.

According to still another aspect of the present invention, there is provided a gradation conversion method including a step of calculating a brightness of each pixel of an input image in a first region which is a predetermined region centering on the pixel so as to calculate a first illumination light distribution indicating a distribution of illumination light intensities of the input image; a step of calculating a first correction coefficient which is a coefficient which monotonously decreases relative to the illumination light intensity in a case where the illumination light intensity is equal to or higher than a predetermined threshold value, for each pixel of the input image, on the basis of the first illumination light distribution; a step of performing gradation conversion on the input image by converting a gradation value of each pixel of the input image by using the first correction coefficient; a step of calculating a brightness of each pixel of an image having undergone the gradation conversion in a second region smaller than the first region, centering on the pixel, so as to calculate a second illumination light distribution indicating a distribution of illumination light intensities of the input image; a step of calculating a second correction coefficient which is a coefficient which monotonously increases relative to the illumination light intensity, for each pixel of the image having undergone the gradation conversion, on the basis of the second illumination light distribution; and a step of performing gradation conversion on the image having undergone the gradation conversion by converting a gradation value of each pixel of the image having undergone the gradation conversion by using the second correction coefficient.

According to still another aspect of the present invention, there is provided a program causing a computer to execute a step of calculating a brightness of each pixel of an input image in a first region which is a predetermined region centering on the pixel so as to calculate a first illumination light distribution indicating a distribution of illumination light intensities of the input image; a step of calculating a first correction coefficient which is a coefficient which monotonously decreases relative to the illumination light intensity in a case where the illumination light intensity is equal to or higher than a predetermined threshold value, for each pixel of the input image, on the basis of the first illumination light distribution; a step of performing gradation conversion on the input image by converting a gradation value of each pixel of the input image by using the first correction coefficient; a step of calculating a brightness of each pixel of an image having undergone the gradation conversion in a second region smaller than the first region, centering on the pixel, so as to calculate a second illumination light distribution indicating a distribution of illumination light intensities of the input image; a step of calculating a second correction coefficient which is a coefficient which monotonously increases relative to the illumination light intensity, for each pixel of the image having undergone the gradation conversion, on the basis of the second illumination light distribution; and a step of performing gradation conversion on the image having undergone the gradation conversion by converting a gradation value of each pixel of the image having undergone the gradation conversion by using the second correction coefficient. Advantageous Effects of Invention

According to the aspects of the present invention, the image processing device can improve visibility of a dark region in an input image and improve a contrast feeling. Brief Description of Drawings
[Fig. 1] Fig. 1 is a schematic block diagram illustrating a configuration of an image processing device according to a first embodiment of the present invention.
[Fig. 2] Fig. 2 is a flowchart illustrating an operation of the image processing device according to the first embodiment.
[Fig. 3] Fig. 3 is a diagram illustrating an example of an illumination light distribution Y1 calculated by a first illumination light distribution calculation unit.
[Fig. 4] Fig. 4 is a diagram illustrating an example of a relationship between an illumination light distribution and a correction coefficient.
[Fig. 5] Fig. 5 is a diagram illustrating an example of a state of pixel values of a local region in a case where gradation conversion is performed by using the correction coefficient.
[Fig. 6] Fig. 6 is a diagram illustrating an example of an image which is output by a first gradation conversion unit.
[Fig. 7] Fig. 7 is a diagram illustrating an example of an illumination light distribution Y2 calculated by a second illumination light distribution calculation unit.
[Fig. 8] Fig. 8 is a diagram illustrating an example of a relationship between an illumination light distribution and a correction coefficient.
[Fig. 9] Fig. 9 is a diagram illustrating an example of a state of a pixel value of a local region in a case where gradation conversion is performed by using the correction coefficient.
[Fig. 10] Fig. 10 is a diagram illustrating an example of an image which is output by a second gradation conversion unit.
[Fig. 11] Fig. 11 is a schematic block diagram illustrating a configuration of an image display device including the image processing device according to the first embodiment.
[Fig. 12] Fig. 12 is a schematic block diagram illustrating a configuration of an image capture device including the image processing device according to the first embodiment.
[Fig. 13] Fig. 13 is a schematic block diagram illustrating a configuration of an image printing device including the image processing device according to the first embodiment.
[Fig. 14] Fig. 14 is a schematic block diagram illustrating a configuration of an image processing device according to a second embodiment of the present invention.
[Fig. 15] Fig. 15 is a schematic block diagram illustrating a configuration of an image processing device according to a third embodiment of the present invention.
[Fig. 16] Fig. 16 is a schematic block diagram illustrating a configuration of an image processing device according to a fourth embodiment of the present invention.
[Fig. 17] Fig. 17 is a schematic diagram illustrating a configuration of an image display device according to a fifth embodiment of the present invention.
[Fig. 18] Fig. 18 is a conceptual diagram illustrating an example of gradation values of an input image signal.
[Fig. 19] Fig. 19 is a conceptual diagram illustrating an example of luminances of an input image.
[Fig. 20] Fig. 20 is a conceptual diagram illustrating an example of luminances of another input image.
[Fig. 21] Fig. 21 is a conceptual diagram illustrating an example of gradation values of an output image signal.
[Fig. 22] Fig. 22 is a conceptual diagram illustrating an example of luminances of an output image in a case where gradation conversion is performed.
[Fig. 23] Fig. 23 is a schematic diagram illustrating a configuration of an image processing unit according to the fifth embodiment.
[Fig. 24] Fig. 24 is a schematic diagram illustrating a configuration of an image capture device according to a sixth embodiment of the present invention.
[Fig. 25] Fig. 25 is a diagram illustrating an arrangement example of light sources of an illumination device according to a seventh embodiment of the present invention.
[Fig. 26] Fig. 26 is a diagram illustrating an arrangement example of pixels of an image display unit according to the seventh embodiment.
[Fig. 27] Fig. 27 is a conceptual diagram illustrating an example of luminances of an output image.
[Fig. 28] Fig. 28 is a conceptual diagram illustrating an example of gradation values of an output image signal.
[Fig. 29] Fig. 29 is a schematic diagram illustrating a configuration of an image display device according to an eighth embodiment of the present invention.
[Fig. 30] Fig. 30 is a conceptual diagram illustrating another example of gradation values of an output image signal.
[Fig. 31] Fig. 31 is a conceptual diagram illustrating an example of luminances of an illumination device.
[Fig. 32] Fig. 32 is a conceptual diagram illustrating another example of luminances of the illumination device.
[Fig. 33] Fig. 33 is a conceptual diagram illustrating an example of gradation values of a corrected output image signal.
[Fig. 34] Fig. 34 is a conceptual diagram illustrating an example of luminances of a corrected output image.
[Fig. 35] Fig. 35 is a conceptual diagram illustrating an arrangement example of light sources and pixels according to the eighth embodiment.
[Fig. 36] Fig. 36 is a conceptual diagram illustrating another arrangement example of light sources and pixels according to the eighth embodiment.

### Description of Embodiments

### (First Embodiment)

Hereinafter, with reference to the drawings, a first embodiment of the present invention will be described in detail.

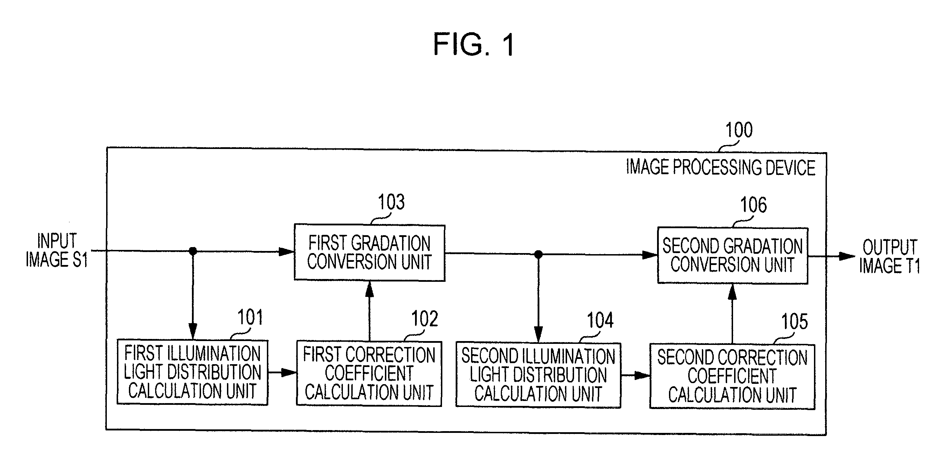

Fig. 1 is a schematic block diagram illustrating a configuration of an image processing device 100 according to the first embodiment.

The image processing device 100 according to the present embodiment includes a first illumination light distribution calculation unit 101, a first correction coefficient calculation unit 102, a first gradation conversion unit 103, a second illumination light distribution calculation unit 104, a second correction coefficient calculation unit 105, and a second gradation conversion unit 106, and performs an image process on an input image S1 so as to output an image obtained through the image process.

The image processing device 100 performs an image process through a software process using a central processing unit (CPU) or a graphics processing unit (GPU), or through a hardware process using an application specific integrated circuit (ASIC) or a field programmable gate array (FPGA).

The first illumination light distribution calculation unit 101 calculates an illumination light distribution Y1 (first illumination light distribution) indicating an illumination light intensity of each pixel of an input image S1 on the basis of the input image S1.

The first correction coefficient calculation unit 102 calculates a correction coefficient α (first correction coefficient) which monotonously decreases relative to the illumination light intensity in a case where the illumination light intensity is equal to or higher than a predetermined threshold value and monotonously increases relative to the illumination light intensity in a case where the illumination light intensity is lower than the predetermined threshold value, for each pixel of the input image S1 on the basis of the illumination light distribution Y1. In the present embodiment, the "monotonous decrease" refers to a relationship of f(x₁)≥f(x₂) at x₁<x₂ (monotonous decrease in a broad sense or monotonous non-increase).

The first gradation conversion unit 103 multiplies a gradation value of each pixel of the input image S1 by the correction coefficient α, so as to perform a gradation conversion on the input image S1.

The second illumination light distribution calculation unit 104 calculates an illumination light distribution Y2 (second illumination light distribution) indicating an illumination light intensity of each pixel of an image on which the first gradation conversion unit 103 has performed the gradation conversion.

The second correction coefficient calculation unit 105 calculates a correction coefficient β (second correction coefficient) which monotonously increases relative to the illumination light intensity for each pixel of the image on which the first gradation conversion unit 103 has performed the gradation conversion on the basis of the illumination light distribution Y2. In the present embodiment, the "monotonous increase" refers to a relationship of f(x₁)≤f(x₂) at x₁<x₂ (monotonous increase in a broad sense or monotonous non-decrease).

The second gradation conversion unit 106 multiplies a gradation value of each pixel of the image on which the first gradation conversion unit 103 has performed the gradation value by the correction coefficient β, so as to perform gradation conversion on the image on which the first gradation conversion unit 103 has performed the gradation value. In the above-described manner, the second gradation conversion unit 106 generates an output image T1.

Next, an operation of the image processing device 100 according to the first embodiment will be described.

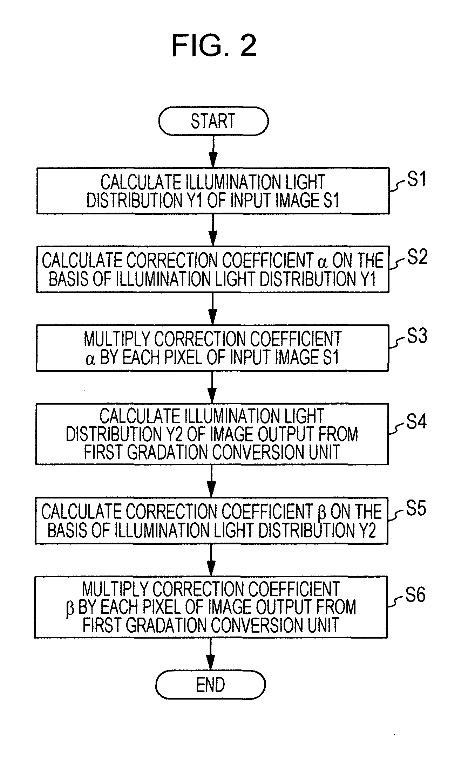

Fig. 2 is a flowchart illustrating an operation of the image processing device 100 according to the first embodiment.

First, the first illumination light distribution calculation unit 101 calculates the illumination light distribution Y1 of the input image S1 which is input to the image processing device 100, and outputs the result to the first correction coefficient calculation unit 102 (step S1). Specifically, the first illumination light distribution calculation unit 101 calculates the illumination light distribution Y1 by averaging brightnesses Y of the respective pixels on the basis of the assumption that an illumination light distribution continuously changes in the image. The brightnesses Y in the present embodiment may be calculated by using Y=0.299xR+0.587xG+0.114xB on the basis of pixel values of respective colors including red R, green G, and blue B. For simplification of computation, the brightnesses Y may be calculated by using Y=R+G+B, Y=0.25xR+0.5xG+0.25xB, or the like. The maximum values (brightnessnes represented by the HSV color space) of the red, green and blue pixel values may be used as the brightnesses Y.

For example, an average value of each pixel of peripheral pixels of the input image S1, or a weighted average is used to average the brightnesses Y in the first illumination light distribution calculation unit 101. Since an averaging region (first region) preferably has a size of a degree in which brightnesses can be compared with each other in the region when a user views a display, and the averaged region is set as appropriate depending on an assumed visual distance and a display size.

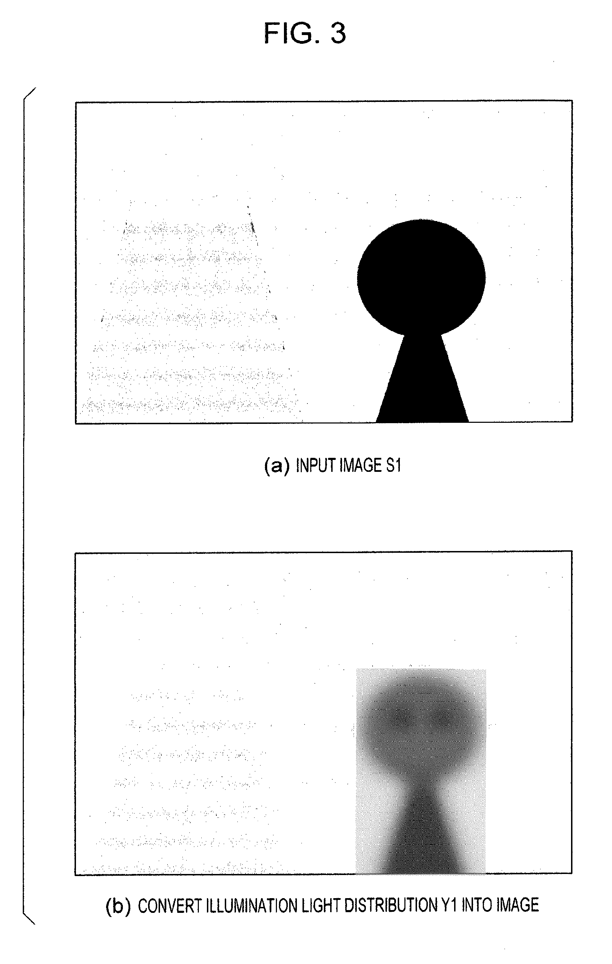

Fig. 3 is a diagram illustrating an example of the illumination light distribution Y1 calculated by the first illumination light distribution calculation unit 101.

When an image illustrated in Fig. 3(a) is input to the image processing device 100 as the input image S1, the first illumination light distribution calculation unit 101 averages respective pixels of the input image S1 in the first region so as to calculate the illumination light distribution Y1 illustrated in Fig. 3(a). Fig. 3(b) illustrates an image into which the calculated illumination light distribution Y1 is converted.

Next, the first correction coefficient calculation unit 102 calculates the correction coefficient α which monotonously decreases relative to the illumination light intensity when the illumination light intensity is equal to or higher than a predetermined threshold value Yth and monotonously increases relative to the illumination light intensity when the illumination light intensity is lower than the threshold value Yth on the basis of the illumination light distribution Y1 calculated by the first illumination light distribution calculation unit 101 (step S2).

In other words, in a case where the illumination light intensity of the illumination light distribution Y1 is large, that is, the illumination light is sufficient to capture a bright image of a subject, the first correction coefficient calculation unit 102 sets the correction coefficient α to a small value. On the other hand, in a case where the illumination light intensity of the illumination light distribution Y1 is small, that is, the illumination light is insufficient and thus a dark image of a subject is captured, the first correction coefficient calculation unit 102 sets the correction coefficient α to a great value. Consequently, it is possible to increase a gradation value of a dark region and thus to improve the visibility.

The first correction coefficient calculation unit 102 sets the correction coefficient α for a region where the illumination light intensity of the illumination light distribution Y1 is lower than the predetermined threshold value Yth, to a small value. For example, α is set to a value smaller than 1 in a region where Y1 is smaller than Yth and is close to 0. In a region of the input image S1 in which the illumination light intensity of the illumination light distribution Y1 is very low, there is a concern that dark portion noise may occur in image capturing and thus information regarding a subject may not be identified due to the noise. For this reason, the correction coefficient α is set to a small value, and thus the gradation conversion is performed by using the small correction coefficient for the noise, thereby reducing that the noise is visible.

As mentioned above, the first correction coefficient calculation unit 102 changes the correction coefficient α depending on the illumination light intensity in each pixel, indicated by the illumination light distribution Y1 so as to calculate the correction coefficient α for improving the visibility of a dark region while maintaining a local contrast. This is because the illumination light intensity of the illumination light distribution Y1 is calculated by averaging the brightnesses Y so that illumination light intensities of the illumination light distributions Y1 are values of two adjacent pixels close to each other, and thus correction coefficients α for two adjacent pixels are also values close to each other. In other words, since the correction coefficients α for the two adjacent pixels are values close to each other, a relationship between gradation values of the two pixels before being converted is also maintained in a similar relationship after conversion is performed. Therefore, if the correction coefficient α is determined by using the illumination light distribution Y1, it is possible to perform gradation conversion while maintaining a local contrast without image quality deterioration such as compression of gradations of a bright region.

The first correction coefficient calculation unit 102 sets the correction coefficient α for a pixel for which the illumination light intensity of the illumination light distribution Y1 becomes the maximum value, to 1. Here, the first correction coefficient calculation unit 102 sets the correction coefficient α so that a gradation value obtained by multiplying a gradation value of the brightest pixel by the correction coefficient α is greater than a gradation value obtained by multiplying a gradation value of another pixel by the correction coefficient α.

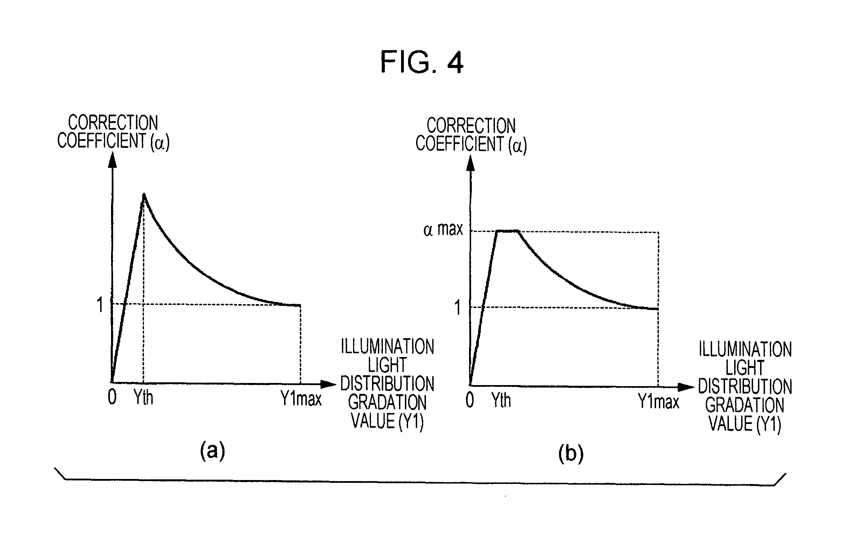

Fig. 4 is a diagram illustrating an example of a relationship between the illumination light distribution Y1 and the correction coefficient α.

As illustrated in Fig. 4(a), the correction coefficient α becomes the maximum value when the illumination light intensity of the illumination light distribution Y1 is the threshold value Yth. In addition, in a case where the illumination light intensity of the illumination light distribution Y1 is lower than the threshold value Yth, the correction coefficient α monotonously increases relative to the illumination light intensity. On the other hand, in a case where the illumination light intensity of the illumination light distribution Y1 is equal to or higher than the threshold value Yth, the correction coefficient α monotonously decreases relative to the illumination light intensity.

In a region where the illumination light intensity of the illumination light distribution Y1 increases, the correction coefficient α may be saturated to a specific value. In other words, in a case where the illumination light intensity of the illumination light distribution Y1 is low, the saturation is realized by setting a slope of the correction coefficient α relative to the illumination light intensity to 0 or more. In a case where the illumination light intensity of the illumination light distribution Y1 is high, the saturation is realized by setting a slope of the correction coefficient α relative to the illumination light intensity to 0 or less.

The first correction coefficient calculation unit 102 may use a function as illustrated in Fig. 4(b) in order to calculate the correction coefficient α. In Fig. 4(b), the maximum value αmax of the correction coefficient α is set relative to the illumination light intensity of the illumination light distribution Y1. If the maximum value of the correction coefficient α is set as mentioned above, it is possible to prevent excessive correction from being performed. A relationship between the illumination light intensity of the illumination light distribution Y1 and the correction coefficient α may be set as appropriate, and the maximum value may be set as mentioned above. If a relationship between the illumination light intensity of the illumination light distribution Y1 and the correction coefficient α is determined above-described, each pixel can be made bright by using gradations excluding a dark portion gradation in which a level of noise is high. Here, if a relationship between the a gradation value Y of the illumination light distribution and the correction coefficient α is set as an LUT, this is suitable for easily calculating the correction coefficient α.

Next, the first gradation conversion unit 103 performs a gradation conversion process on the input image S1 by using the correction coefficient α (step S3). The gradation conversion is performed so that a relationship between an input gradation value P0 and an output gradation value P1 satisfies P1=P0×α. In addition, in a color image including colors such as red, green, and blue, the first gradation conversion unit 103 can perform the conversion without changing a ratio of the respective colors, that is, hue, by multiplying the colors by the same correction coefficient α. In addition, the first gradation conversion unit 103 may perform gradation conversion on a brightness component in each color space, for example, by a color space of each pixel of the input image S1 into the HSV color space and multiplying only the brightness component by the correction coefficient α.

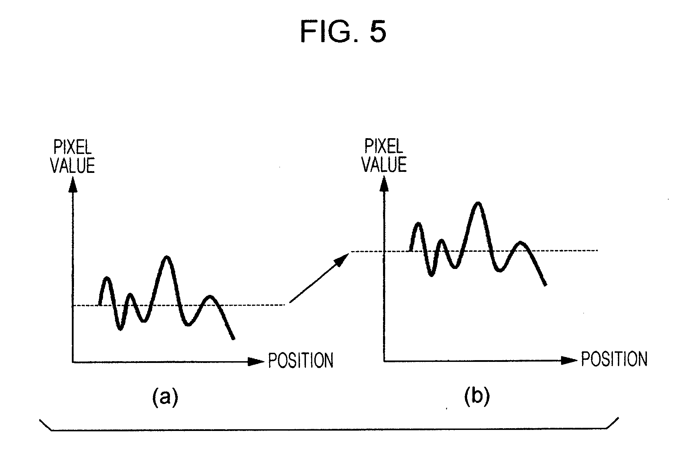

Fig. 5 is a diagram illustrating an example of a state of pixel values of a local region in a case where the gradation conversion is performed by using the correction coefficient α. Here, a transverse axis expresses a position in an image, and a longitudinal axis expresses a pixel value. Fig. 5(a) illustrates a state of pixel values of the input image S1, and Fig. 5(b) illustrates a state of pixel values of an image output from the first gradation conversion unit 103. The region is a local region, and thus illumination light distributions are substantially the same as each other, that is, correction coefficients are substantially the same as each other. Therefore, the change from Fig. 5(a) to Fig. 5(b) is such a change that improves the brightness of the region while maintaining a fine pixel value variation.

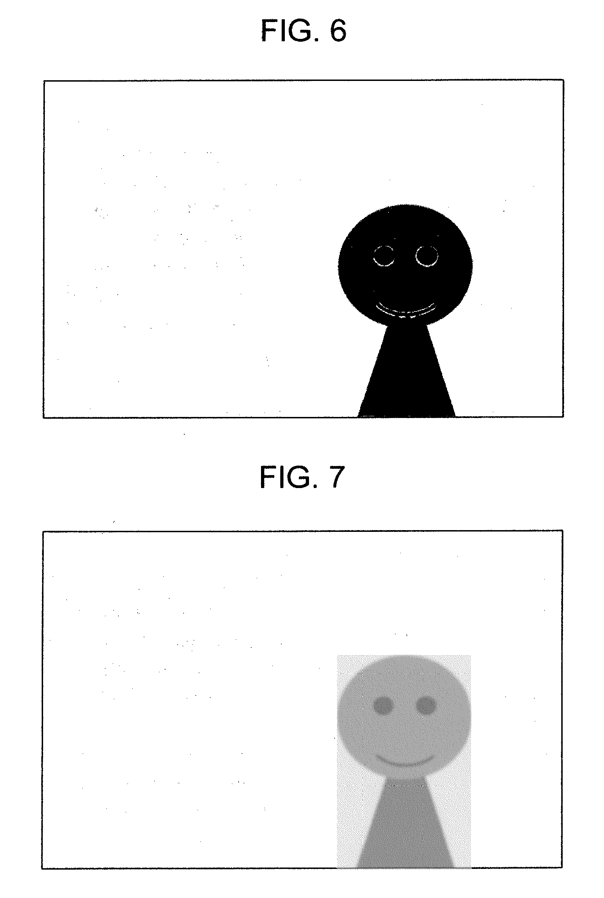

Fig. 6 is a diagram illustrating an example illustrating an image output from the first gradation conversion unit 103.

In the image output from the first gradation conversion unit 103 illustrated in Fig. 6, the visibility of the dark region is improved while maintaining a local contrast, compared with the input image S1 illustrated in Fig. 2(a). An image process is performed so that the entire image becomes brighter as the impression of the entire image. As mentioned above, if the gradation conversion is performed by using the correction coefficient α which is a coefficient that monotonously decreases relative to the illumination light intensity when the illumination light intensity calculated by averaging brightnesses is equal to or higher than the predetermined threshold value, it is possible to improve the visibility of a dark region while maintaining a local contrast.

Next, the second illumination light distribution calculation unit 104 calculates the illumination light distribution Y2 on the basis of the image which has been processed by the first gradation conversion unit (step S4). In the same manner as in the second illumination light distribution calculation unit 104, the second illumination light distribution calculation unit 104 averages brightnesses by using an average values of each pixel and peripheral pixels thereof or a weighted average of the image which has been processed by the first gradation conversion unit. Here, it is assumed that a region (second region) used for averaging in the second illumination light distribution calculation unit 104 is smaller than the first region used for averaging in the first illumination light distribution calculation unit 101. This is aimed at emphasizing a local contrast of the image through gradation conversion in the second gradation conversion unit 106.

Fig. 7 is a diagram illustrating an example of the illumination light distribution Y2 calculated by the second illumination light distribution calculation unit 104.

When the first gradation conversion unit 103 outputs the image illustrated in Fig. 6, the second illumination light distribution calculation unit 104 averages respective pixels of the image illustrated in Fig. 6 in the second region so as to calculate the illumination light distribution Y2. Fig. 7 illustrates an image into which the calculated illumination light distribution Y2 is converted. In the above-described manner, the averaging region is smaller in the illumination light distribution Y2 than in the illumination light distribution Y1 illustrated in Fig. 3(b), and thus a blur level is reduced. In other words, an influence of a focused pixel on the illumination light distribution Y2 increases.

A brightness calculation method used by the first illumination light distribution calculation unit 101 may be the same as a brightness calculation method used by the second illumination light distribution calculation unit 104. This is preferable since, when gradation conversion is performed by using the illumination light distribution, the conversion is performed by using not a color but a brightness so as to reduce an influence of the reflectance (color) of a subject, and brightness calculation methods are commonalized so that an influence caused by a color difference of pixels can be reduced.

Next, the second correction coefficient calculation unit 105 calculates the correction coefficient P which monotonously increases relative to the illumination light intensity on the basis of the illumination light distribution Y2 calculated by the second illumination light distribution calculation unit 104 (step S5). As described above, the second region used to calculate the illumination light distribution Y2 in the second illumination light distribution calculation unit 104 is smaller than the first region used to calculate the illumination light distribution Y1 in the first illumination light distribution calculation unit 101. Therefore, the second gradation conversion unit 106 performs the conversion in consideration of the region smaller than the region in which the first gradation conversion unit 103 has performed the conversion process while maintaining a local contrast.

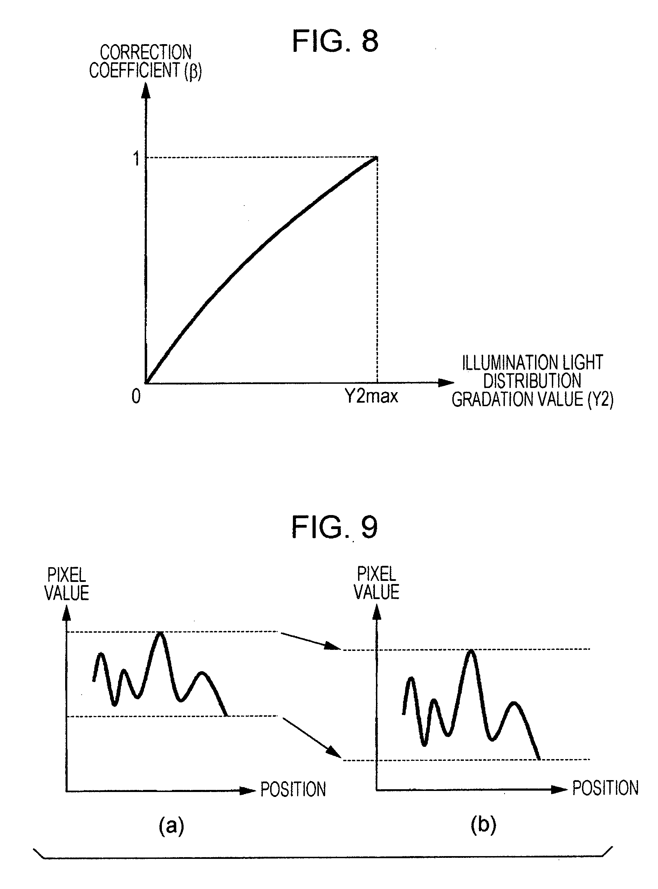

Fig. 8 is a diagram illustrating a relationship between the illumination light distribution Y2 and the correction coefficient β.

The second correction coefficient calculation unit 105 sets the correction coefficient P for a pixel for which the illumination light intensity of the illumination light distribution Y2 becomes the maximum value, to 1. Here, the second correction coefficient calculation unit 105 sets the correction coefficient β so that a gradation value obtained by multiplying a gradation value of the brightest pixel by the correction coefficient β is greater than a gradation value obtained by multiplying a gradation value of another pixel by the correction coefficient β. The correction coefficient may be saturated in a region where a value of the illumination light distribution is great, and a region where a value of the illumination light distribution is small.

Next, the second gradation conversion unit 106 performs gradation conversion on the image on which the gradation conversion has been performed by the first gradation conversion unit 103 by using the illumination light distribution Y2 calculated by the second illumination light distribution calculation unit 104 (step S6). The gradation conversion is performed so that a relationship between an input gradation value P1 and an output gradation value P2 satisfies P2=P1×β. In addition, in a color image including colors such as red, green, and blue, the second gradation conversion unit 106 can perform the conversion without changing a ratio of the respective colors, that is, hue, by multiplying the colors by the same correction coefficient β. In addition, the second gradation conversion unit 106 may perform gradation conversion on a brightness component in each color space, for example, by a color space of each pixel of the input image S1 into the HSV color space and multiplying only the brightness component by the correction coefficient β.

As illustrated in Fig. 8, the correction coefficient β is a value which is equal to or smaller than 1, and thus the multiplication of the correction coefficient β leads to such gradation conversion that reduces pixel values of the input image. In other words, the second gradation conversion unit 106 emphasizes the local contrast maintained by the first gradation conversion unit 103 through the multiplication of the correction coefficient β. For example, a region of peripheral pixels of a considered focused pixel becomes smallest when averaging is not performed by setting the illumination light distribution Y2 as a brightness of the focused pixel and by setting brightnesses of the peripheral pixels to 0. In this case, correction coefficients of the respective pixels are determined only by the brightness of the focused pixel, and are not influenced by the brightnesses of adjacent pixels. Therefore, if brightnesses of the adjacent pixels are considerably different from each other, correction coefficients P are also different from each other, and the brightnesses of the pixels are similar to each other, the correction coefficients β are also similar to each other. Consequently, the local contrast is emphasized.

Fig. 9 is a diagram illustrating an example of a state of pixel values of a local region in a case where the gradation conversion is performed by using the correction coefficient β.

Here, a transverse axis expresses a position in an image, and a longitudinal axis expresses a pixel value. Fig. 9(a) illustrates a state of pixel values of the image output from the first gradation conversion unit 103, and Fig. 9(b) illustrates a state of pixel values of an image output from the second gradation conversion unit 106. As illustrated in Fig. 9, since the second region which is referred to when the illumination light distribution Y2 is calculated is smaller than the first region, a change in the pixel value of each pixel increases, and thus a local contrast is emphasized.

The second correction coefficient calculation unit 105 according to the present embodiment sets such a correction coefficient P that reduces a gradation value, but the first correction coefficient calculation unit 102 sets the correction coefficient α so that the input image S1 is made bright, and thus the entire image does not extremely become dark.

In other words, the first correction coefficient calculation unit 102 and the second correction coefficient calculation unit 105 have to set the correction coefficient α and the correction coefficient β in consideration of the mutual magnitudes of the correction coefficient α and the correction coefficient β. For example, there is a method of setting the correction coefficient α and the correction coefficient β so that a product of the correction coefficient α and the correction coefficient β becomes 1 or greater when a dark region of the illumination light distribution is excluded. In addition, there is a method of setting the correction coefficient α and the correction coefficient β so that a product of the correction coefficient α and the correction coefficient β which are greater than a median of values taken by the illumination light distributions becomes 1 or greater.

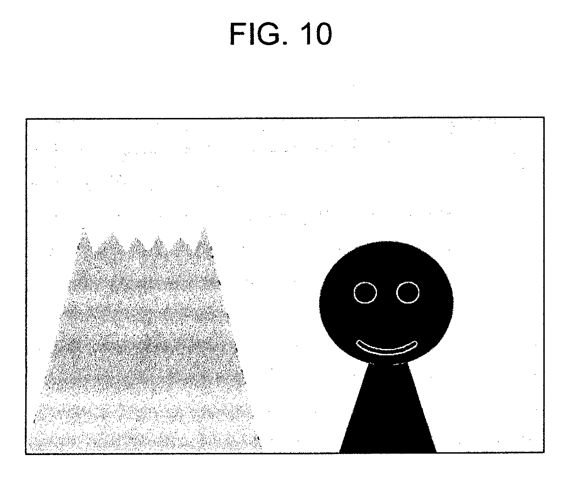

Fig. 10 is a diagram illustrating an example of an image output from the second gradation conversion unit 106.

The image output from the second gradation conversion unit 106, illustrated in Fig. 10, is an image in which the local contrast is emphasized, compared with the image output from the first gradation conversion unit 103, illustrated in Fig. 6. The image output from the second gradation conversion unit 106, illustrated in Fig. 10, is an image in which the visibility of the dark region is improved and the local contrast is also improved, compared with the input image S1 illustrated in Fig. 2(a).

As mentioned above, the contrast of the image has been entirely reduced due to the process in the first gradation conversion unit 103, and the local contrast of the image is improved through the process in the second gradation conversion unit 106. Therefore, it is possible to improve the contrast of the entire image. Consequently, the image processing device 100 can generate an image in which the visibility of a dark region is improved and which has a contrast feeling.

As described above, according to the image processing device 100 of the present embodiment, gradation conversion is performed by using the illumination light distribution, and thus it is possible to improve the visibility of a dark region and also to improve the local contrast, thereby generating a preferable image.

Hereinafter, applications of the image processing device 100 according to the first embodiment will be described.

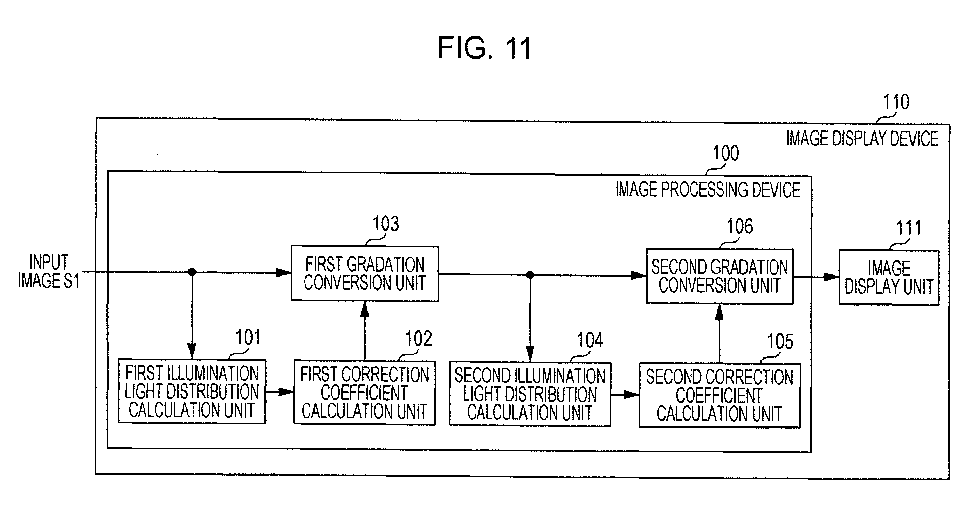

Fig. 11 is a schematic block diagram illustrating a configuration of an image display device 110 including the image processing device 100 according to the first embodiment.

The image display device 110 includes an image display unit 111 in addition to the image processing device 100 according to the first embodiment.

The image display unit 111 displays an image generated by the image processing device 100. The image display unit 111 may be constituted by various display devices such as a liquid crystal display or an organic EL display. Consequently, it is possible to implement the image display device 110 which can display a high quality image which has high visibility by improving the visibility of a dark region and also improving the local contrast. Here, general image processes such as γ correction, color conversion, or contour emphasis may be performed as appropriate before an image is input to the image processing device 100, or after an image is output from the image processing device 100.

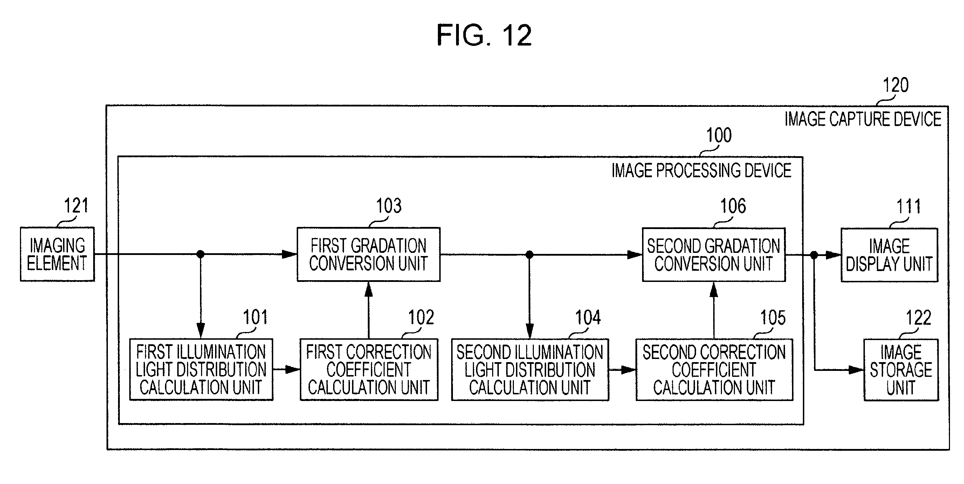

Fig. 12 is a schematic block diagram illustrating a configuration of an image capture device 120 including the image processing device 100 according to the first embodiment.

The image capture device 120 includes an image display unit 111, an imaging element 121, and an image storage unit 122 in addition to the image processing device 100 according to the first embodiment.

The imaging element 121 is constituted by an imaging device such as a charge coupled device (CCD), and outputs a captured image to the image processing device 100 as the input image S1. At this time, the input image S1 undergoes a general image process such as a de-mosaic process and is then input to the image processing device 100.

An image generated by the image processing device 100 is transmitted to the image display unit 111 or the image storage unit 122, and the image is displayed or stored. The image storage unit 122 may be constituted by various storage devices such as a flash memory or a hard disk. Consequently, it is possible to implement an image capture device which can capture a high quality image which has high visibility by improving the visibility of a dark region and also improving the local contrast. Here, general image processes such as γ correction, color conversion, or contour emphasis may be performed as appropriate after an image is output from the image processing device 100.

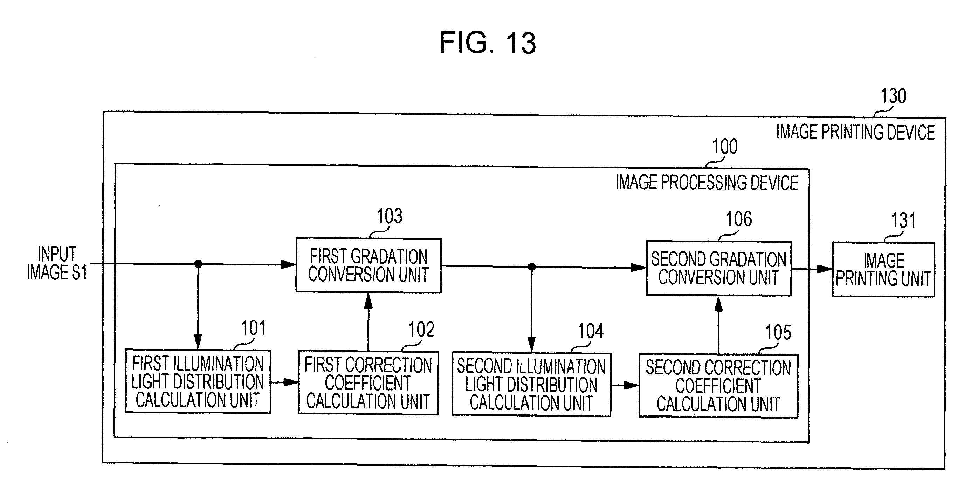

Fig. 13 is a schematic block diagram illustrating a configuration of an image printing device 130 including the image processing device 100 according to the first embodiment.

The image printing device 130 includes an image printing unit 131 in addition to the image processing device 100 according to the first embodiment.

The image printing unit 131 prints an image generated by the image processing device 100. The image printing unit 131 may be constituted by various printing devices such as an inkjet printer or a laser printer. Consequently, it is possible to implement the image printing device 130 which can display a high quality image which has high visibility by improving the visibility of a dark region and also improving the local contrast. Here, general image processes such as γ correction, color conversion, or contour emphasis may be performed as appropriate before an image is input to the image processing device 100, or after an image is output from the image processing device 100.

### (Second Embodiment)

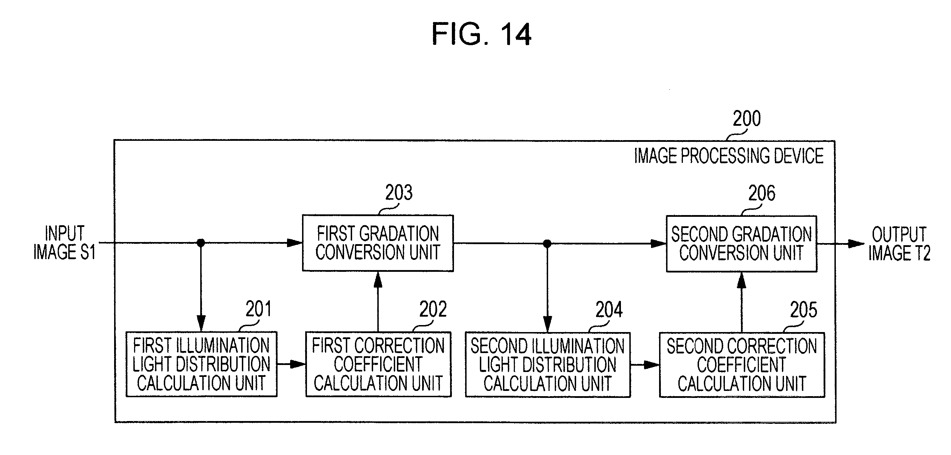

Fig. 14 is a schematic block diagram illustrating a configuration of an image processing device 200 according to a second embodiment.

In the first embodiment, a description has been made of a case where each of the first illumination light distribution calculation unit 101 and the second illumination light distribution calculation unit 104 calculates a single illumination light distribution. Each of a first illumination light distribution calculation unit 201 and a second illumination light distribution calculation unit 204 according to the second embodiment calculates a plurality of illumination light distributions by using a plurality of regions having different sizes.

Each of the first illumination light distribution calculation unit 201 and the second illumination light distribution calculation unit 204 calculates two illumination light distributions. In this case, first regions and second regions are determined so that the smallest region of the plurality of first regions used for averaging in the first illumination light distribution calculation unit 201 is larger than the largest region of the plurality of second regions used for averaging in the second illumination light distribution calculation unit 204.

A first correction coefficient calculation unit 202 and a second correction coefficient calculation unit 205 use a product or a sum of correction coefficients calculated on the basis of respective illumination light distributions, as the correction coefficient α and the correction coefficient β.

Consequently, a first gradation conversion unit 203 can adjust a region of which the local contrast is maintained. In other words, the first gradation conversion unit 203 can perform conversion for maintaining a contrast of a smaller region. This is suitable for improving the visibility when a dark region is small, since the illumination light distribution is calculated in a small region and thus the conversion can be performed by using a large correction coefficient when the dark region is small.

A second gradation conversion unit 206 can adjust a frequency for emphasizing the local contrast. In other words, the second gradation conversion unit 206 can further emphasize a contrast of each small region by applying a little contrast emphasis to a variation between adjacent pixels. This is suitable for an image having a high noise level since a local contrast can be emphasized and excessive emphasis of noise can be reduced. In the above-described manner, the second gradation conversion unit 206 generates an output image T2.

In the present embodiment, a description has been made of a case where each of the first illumination light distribution calculation unit 201 and the second illumination light distribution calculation unit 204 generates a plurality of illumination light distributions, but the present invention is not limited thereto. For example, either the first illumination light distribution calculation unit 201 or the second illumination light distribution calculation unit 204 may calculate a plurality of illumination light distributions.

### (Third Embodiment)

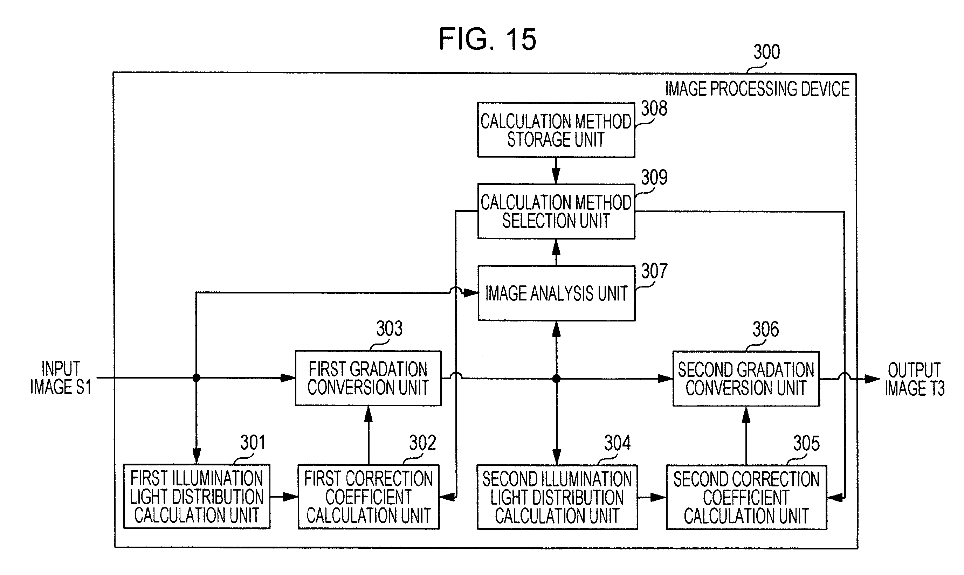

Fig. 15 is a schematic block diagram illustrating a configuration of an image processing device 300 according to a third embodiment.

In the first embodiment, a description has been made of a case where the first correction coefficient calculation unit 102 and the second correction coefficient calculation unit 105 calculate the correction coefficient α and the correction coefficient P on the basis of a predefined single calculation method. A first correction coefficient calculation unit 302 and a second correction coefficient calculation unit 305 according to the third embodiment specify an appropriate calculation method among a plurality of calculation methods, and calculate the correction coefficient α and the correction coefficient β by using the calculation method.

The image processing device 300 includes an image analysis unit 307, a calculation method storage unit 308, and a calculation method selection unit 309 in addition to the same configuration as that of the image processing device 100 according to the first embodiment.

The image analysis unit 307 analyzes the input image S1 and an image on which a first gradation conversion unit 303 has performed gradation conversion. The image analysis unit 307 analyzes, for example, average luminance, the number of pixels of a dark region, and a luminance histogram.

The calculation method storage unit 308 a plurality of LUTs (calculation methods) which are used to calculate the correction coefficient α in the first correction coefficient calculation unit 302 and a plurality of LUTs which are used to calculate the correction coefficient P in the second correction coefficient calculation unit 305. The plurality of LUTs represent the magnitudes of correction coefficients, that is, brightness differences.

The calculation method selection unit 309 specifies an LUT used to calculate the correction coefficient α and an LUT used to calculate the correction coefficient P on the basis of an analysis result from the image analysis unit 307. For example, the calculation method selection unit 309 selects an LUT for calculating the correction coefficient α which causes a dark region to become brighter in cases where an average luminance of the input image S1 is low, the number of pixels of the dark region is large, and a luminance histogram is biased toward the dark region. On the other hand, the calculation method selection unit 309 selects an LUT for calculating the correction coefficient α which causes a dark region to become slightly bright in cases where an average luminance of the input image S1 is high, the number of pixels of the dark region is small, and a luminance histogram is biased toward a bright region.

For example, the calculation method selection unit 309 selects an LUT for calculating the correction coefficient β which causes a local contrast to be considerably emphasized in a case where a contrast of an image on which the first gradation conversion unit 103 has performed gradation conversion is low, the number of high frequency components thereof is small, or there is a bias in a luminance histogram. On the other hand, the calculation method selection unit 309 selects an LUT for calculating the correction coefficient β which causes a local contrast to be slightly emphasized in a case where a contrast of an image on which the first gradation conversion unit 303 has performed gradation conversion is high, the number of high frequency components thereof is large, or there is no bias in a luminance histogram.

A second gradation conversion unit 306 performs the same process as that in the second gradation conversion unit 106 of the first embodiment, so as to generate an output image T3.

As mentioned above, if a referenced region of peripheral pixels is changed during calculation of an illumination light distribution on the basis of a result of analyzing an image, this is preferable since an LUT which is more appropriate for the input image S1 can be selected.

In the present embodiment, a description has been made of a case where the calculation method storage unit 308 stores an LUT as a correction coefficient calculation method, but the present invention is not limited thereto, and, other calculation methods, for example, a function which has an illumination light intensity as an input and a correction coefficient as an output, may be stored.

### (Fourth Embodiment)

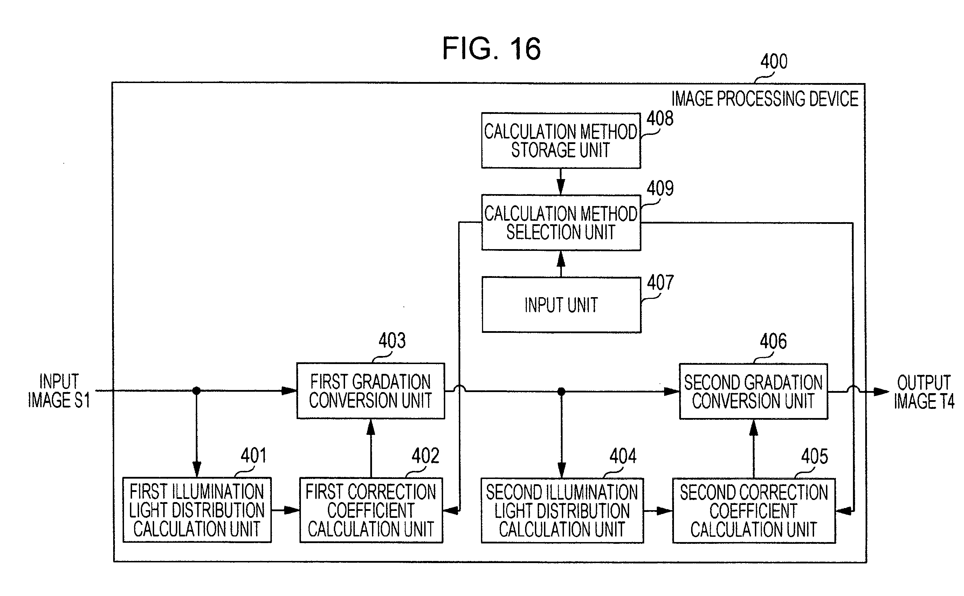

Fig. 16 is a schematic block diagram illustrating a configuration of an image processing device 400 according to a fourth embodiment.

In the third embodiment, a description has been made of a case where LUTs for calculating the correction coefficient α and the correction coefficient β are selected on the basis of an analysis result from the image analysis unit 307. The image processing device 400 according to the fourth embodiment selects LUTs for calculating the correction coefficient α and the correction coefficient β in response to an instruction from a user.

The image processing device 400 includes an input unit 407 instead of the image analysis unit 307 of the image processing device 300 according to the third embodiment.

The input unit 407 receives inputting of an instruction from a user.

A calculation method selection unit 409 selects calculation methods of the correction coefficient α and the correction coefficient β, stored in a calculation method storage unit 408, in response to the instruction from the user, received by the input unit.

A second gradation conversion unit 406 performs the same process as that in the second gradation conversion unit 106 of the first embodiment so as to generate an output image T4.

In the present embodiment, a description has been made of a case where the calculation method storage unit 408 stores an LUT as a correction coefficient calculation method, but the present invention is not limited thereto, and, other calculation methods, for example, a function which has an illumination light intensity as an input and a correction coefficient as an output, may be stored.

### (Fifth Embodiment)

Hereinafter, with reference to the drawings, a fifth embodiment of the present invention will be described.

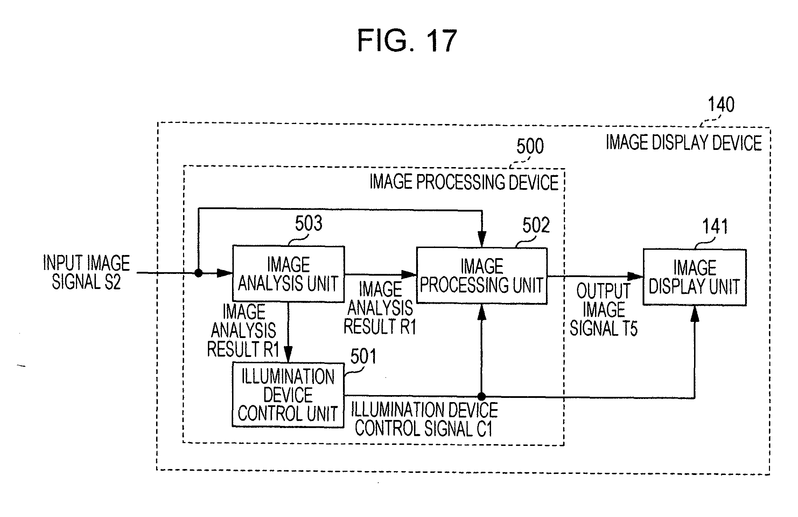

Fig. 17 is a schematic diagram illustrating a configuration of an image display device 140 according to the present embodiment.

The image display device 140 includes an image processing device 500 and an image display unit 141.

The image processing device 500 includes an illumination device control unit 501, an image processing unit 502, and an image analysis unit 503. The image processing unit 502 corresponds to the image processing device 100 according to the first embodiment.

The illumination device control unit 501 sets a light amount of an illumination device (not illustrated) of the image display unit 141 on the basis of an image analysis result R1 which is input from the image analysis unit 503, and generates an illumination device control signal C1 for controlling the illumination device so that the set light amount is obtained. The illumination device control signal C1 is a signal indicating, for example, an output coefficient γ. The output coefficient γ is a ratio of a light amount radiated by the illumination device to the maximum light amount which can be radiated by the illumination device. The illumination device control unit 501 outputs the generated illumination device control signal C1 to the image processing unit 502 and the image display unit 141.

The image processing unit 502 receives the illumination device control signal C1 from the illumination device control unit 501 and the image analysis result R1 from the image analysis unit 503. The image processing unit 502 performs gradation conversion on an input image signal S2 which is input to the image processing device 500 so as to generate an output image signal T5 on the basis of the illumination device control signal C1 and the image analysis result R1. The input image signal S2 corresponds to the input image S1 of the first to fourth embodiments. The input image signal S2 is a signal indicating an image including a plurality of predefined pixels, and is a signal indicating a gradation value of each pixel. A great gradation value causes an image to be displayed bright, and a small gradation value causes an image to be displayed dark. Here, the image processing unit 502 performs gradation conversion so that the visibility or the contrast of an image displayed on the image display unit 141 is not reduced, even if a light amount radiated by the illumination device is different from a predefined reference value (for example, the maximum value). The image processing unit 502 outputs the generated output image signal T5 to the image display unit 141.

The image processing unit 502 may be realized by hardware such as a central processing unit (CPU) or a graphics processing unit (GPU) provided in the image display device 140 executing a program. In addition, the image processing unit 502 may be constituted by hardware such as an application specific integrated circuit (ASIC) or a field programmable gate array (FPGA).

The image display unit 141 displays an image indicated by the output image signal T5 which is input from the image processing unit 502. The image display unit 141 is, for example, a liquid crystal display. The image display unit 141 is provided with the above-described illumination device as a light source such as a backlight, and displays image light obtained by modulating light radiated from the illumination device, as an image. The illumination device may include, for example, a cold cathode fluorescent lamp (CCFL) or a light emitting diode (LED). As the LED, a white LED which radiates white light may be provided, and a combination of LEDs which respectively radiate, for example, red light, green light, and blue light may be provided.

A position where the illumination device is installed may be a rear surface of an image display surface on which an image is displayed in the image display unit 141, and may be a part of an outer circumference of the image display surface, for example, an edge portion.

The illumination device controls a radiated light amount on the basis of the illumination device control signal C1 which is input from the illumination device control unit 501.

The image analysis unit 503 calculates statistics of gradation values of the input image signal S2 which is input to the image processing device 500. Consequently, the input image is analyzed. The statistics calculated by the image analysis unit 503 includes, for example, an average luminance, a variance, the number of pixels of a dark region, and a luminance histogram. The average luminance is a gradation value indicating an average of luminances of the pixels. The dark region is a region including a pixel whose gradation value is smaller than a predefined threshold value (for example, 1/4 of the maximum value). The luminance histogram indicates sets of the number of pixels, respectively belonging to predefined ranges of gradation values. The image analysis unit 503 outputs the calculated statistics to the illumination device control unit 501 and the image processing unit 502 as the image analysis result R1.

In the present embodiment, an illumination device light amount selection unit (not illustrated) may be provided. The illumination device light amount selection unit sets a plurality of candidate values of light amounts therein in advance, and selects one of the set candidate values by receiving a user's input operation. The illumination device light amount selection unit generates an illumination device control signal C1 for controlling the illumination device so that a light amount related to the selected candidate value is obtained, and outputs the generated illumination device control signal C1 to the image processing unit 502 and the image display unit 141.

The image analysis unit 503 may be configured to include either one or both of the illumination device control unit 501 and the image processing unit 502.

### (Concept of Gradation Value)

Next, a description will be described of the concept of the gradation conversion performed by the image processing unit 502.

The image processing unit 502 increases an average value of gradation values of the input image signal S2 and also emphasizes the local contrast in the gradation conversion. The local contrast indicates a spatial variation in luminances of pixels within a predefined range with respect to a certain pixel. In addition, the local contrast may indicate a spatial variation in gradation values of pixels within a predefined range with respect to a certain pixel. Consequently, even in a case where a light amount of the illumination device is reduced more than a predefined reference value, it is possible to minimize reductions in the visibility and the contrast of an image displayed on the image display unit 141.

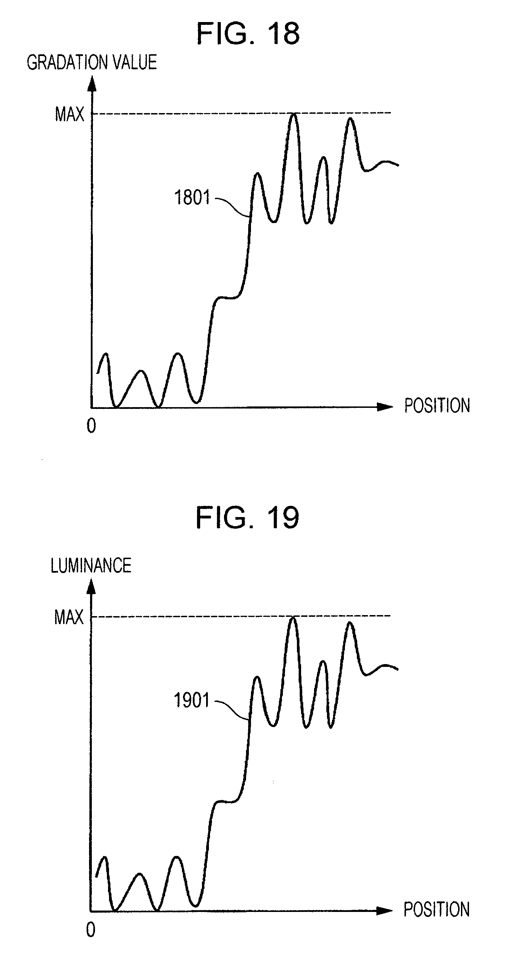

Fig. 18 is a conceptual diagram illustrating an example of gradation values of the input image signal S2.

In Fig. 18, a transverse axis expresses positions of pixels on a single horizontal line, and a longitudinal axis expresses gradation values thereof. An origin O is one point on the image display surface of the image display unit 141, for example, an upper left end. Gradation values 1801 illustrated in Fig. 2 are gradation values of the input image signal S2. The gradation values 1801 tend to show that the gradation values increase as the pixels become distant from the origin O.

Fig. 19 is a conceptual diagram of an example of luminances of the input image.

In Fig. 19, a transverse axis expresses positions of pixels on a single horizontal line, and a longitudinal axis expresses luminances thereof. The luminance indicates a degree of brightness of light radiated from each pixel in the image display unit 141, and depends on a signal value (gradation value) of each pixel and a light amount of the illumination device. In Figs. 18 and 19, the "luminance" indicating a degree of brightness of each pixel and the "gradation value" indicating the signal value are differentiated from each other.

Luminances 1901 illustrated in Fig. 19 are luminances in a case where signal values of the respective pixels are the gradation values 1801 illustrated in Fig. 18, and a light amount of the illumination device is the maximum value. The luminances 1901 tend to show that the luminances increase as the pixels become distant from the origin O.

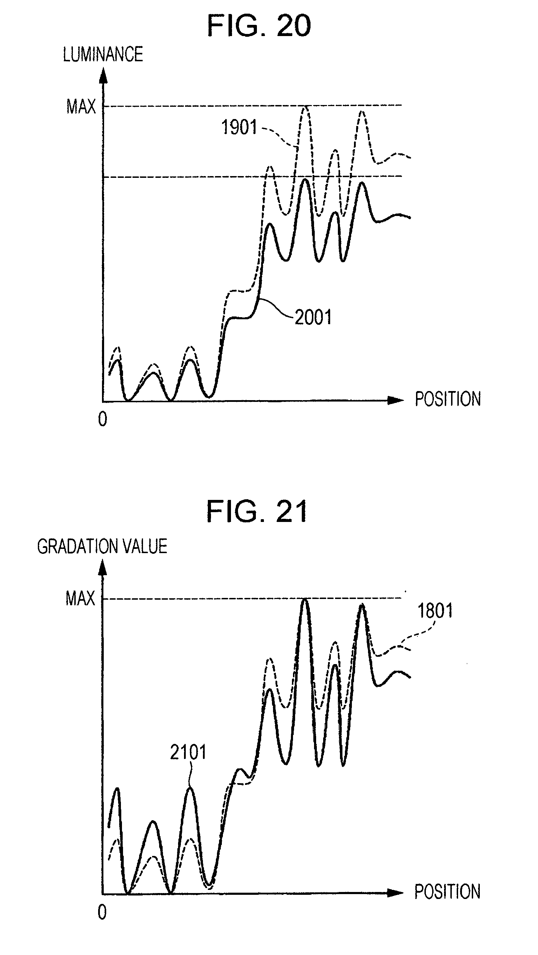

Fig. 20 is a conceptual diagram of an example of luminances of the input image.

In Fig. 20, a transverse axis expresses positions of pixels on a single horizontal line, and a longitudinal axis expresses luminances thereof. Luminances 2001 indicated by a solid line in Fig. 20 are luminances in a case where a signal value of each pixel is the value illustrated in Fig. 18, and a light amount of the illumination device is 3/4 of the maximum value. For comparison, in Fig. 20, the luminances 1901 (refer to Fig. 19) are indicated by a dashed line.

The maximum value of the luminances 2001 is smaller than the maximum value (MAX) of the luminances 1901 (refer to Fig. 19). In addition, an average value or a local variation (contrast) of the luminances 2001 is also smaller than an average value or a local variation of the luminances 1901.

As mentioned above, if a light amount of the light amount is merely reduced, the luminances or the local variation is reduced, and thus the visibility or the contrast of an image deteriorates.

In contrast, the image processing unit 502 performs gradation conversion on the input image signal S2 so as to generate the output image signal T5.

Fig. 21 is a conceptual diagram illustrating an example of gradation values of the output image signal T5.

In Fig. 21, a transverse axis expresses positions of pixels on a single horizontal line, and a longitudinal axis expresses gradation values thereof. Gradation values 2101 indicated by a solid line in Fig. 21 are gradation values of the output image signal T5 in a case where the gradation conversion has been performed. For comparison, in Fig. 21, the gradation values 1801 (refer to Fig. 18) are indicated by a dashed line. Fig. 21 illustrates that an average value of the gradation values in a low gradation region is increased in the gradation value, and local contrasts are emphasized in all the gradation values from the low gradation region to a high gradation region. The low gradation region is a region of pixels which have gradation values smaller than a predefined gradation value (for example, a half value of the maximum value of the gradation values). The high gradation region is a region of pixels which have gradation values greater than the predefined gradation value.

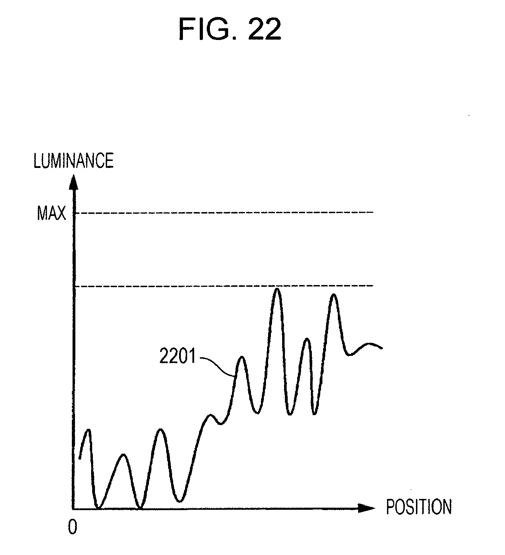

Fig. 22 is a conceptual diagram illustrating an example of luminances of an output image in a case where the gradation conversion has been performed.

In Fig. 22, a transverse axis expresses positions of pixels on a single horizontal line, and a longitudinal axis expresses luminances thereof. Luminances 2201 illustrated in Fig. 22 are luminances of an image displayed on the image display unit 141 in a case where signal values of the respective pixels are the gradation values 2101 illustrated in Fig. 21, and a light amount of the illumination device is 3/4 of the maximum value.

When compared with the luminances 1901 (refer to Fig. 19), the luminances 2201 have a high average luminance in a low gradation region. This shows that the visibility of a dark region is improved. Although a light amount of the illumination device is reduced more than the maximum value, local contrasts increase over all regions from the low gradation region to the high gradation region in the luminances 2201. For this reason, the maximum value of the luminances 2201 is smaller than the maximum value of the luminances 1901, but there is an effect that an image is perceived as being bright by a human visual sense. This is caused by a human visual characteristic in which a difference between a luminance at a gaze point at which a person gazes and luminances around the gaze point, that is, contrast is perceived as brightness. In the present embodiment, by using this visual characteristic, there is an effect that perceived brightness is not reduced even if the maximum value of the luminances is reduced as a result of reducing a light amount of the illumination device.

### (Configuration of Image Processing Unit)

Next, a description will be made of a configuration of the image processing unit 502 according to the present embodiment.

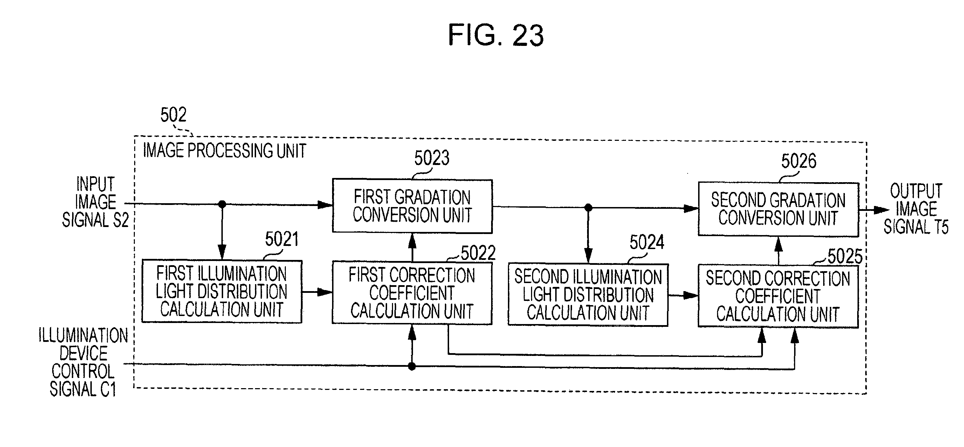

Fig. 23 is a schematic diagram illustrating a configuration of the image processing unit 502 according to the present embodiment.

The image processing unit 502 is configured to include a first illumination light distribution calculation unit 5021, a first correction coefficient calculation unit 5022, a first gradation conversion unit 5023, a second illumination light distribution calculation unit 5024, a second correction coefficient calculation unit 5025, and a second gradation conversion unit 5026. Here, the image processing unit 502 corresponds to the image processing device 100 according to the first embodiment. An internal configuration of the image processing unit 502 is the same as the internal configuration of the image processing device 100, and description of the same internal configuration will be omitted.

The first illumination light distribution calculation unit 5021 calculates an illumination light distribution Y1 (first illumination light distribution) for respective pixels on the basis of the input image signal S2 which is input to the image processing unit 502. The first illumination light distribution calculation unit 5021 outputs the calculated illumination light distribution Y1 to the first correction coefficient calculation unit 5022.

The first correction coefficient calculation unit 5022 calculates a correction coefficient α for the respective pixels on the basis of the illumination light distribution Y1 which is input from the first illumination light distribution calculation unit 5021. The first correction coefficient calculation unit 5022 outputs the calculated correction coefficient α to the first gradation conversion unit 5023 and the second correction coefficient calculation unit 5025.

The first gradation conversion unit 5023 performs a gradation conversion process on the input image signal S2 which is input to the image processing unit 502 on the basis of the correction coefficient α which is input from the first correction coefficient calculation unit 5022, so as to generate a first gradation-converted image signal. The first gradation conversion unit 5023 outputs the first gradation-converted image signal generated through the gradation conversion process, to the second illumination light distribution calculation unit 5024 and the second gradation conversion unit 5026.

The second illumination light distribution calculation unit 5024 calculates an illumination light distribution Y2 (second illumination light distribution) for the respective pixels on the basis of the first gradation-converted image signal which is input from the first gradation conversion unit 5023. The second illumination light distribution calculation unit 5024 outputs the calculated illumination light distribution Y2 to the second correction coefficient calculation unit 5025.

The second correction coefficient calculation unit 5025 calculates a correction coefficient β for the respective pixels on the basis of the illumination light distribution Y2 which is input from the second illumination light distribution calculation unit 5024.

The first correction coefficient calculation unit 5022 and the second correction coefficient calculation unit 5025 respectively set the correction coefficient α and the correction coefficient β, further in consideration of the output coefficient γ indicated by the illumination device control signal C1 which is input from the illumination device control unit 501.

Here, the first correction coefficient calculation unit 5022 and the second correction coefficient calculation unit 5025 respectively set the correction coefficient α and the correction coefficient β so that a product of the correction coefficient α and the correction coefficient β increases according to a decrease in the output coefficient γ. For example, the first correction coefficient calculation unit 5022 and the second correction coefficient calculation unit 5025 may respectively set the correction coefficient α and the correction coefficient β so that the output coefficient γ and a product of the correction coefficient α and the correction coefficient P become 1 or greater in regions of pixels excluding a dark region which includes pixels in which gradation values of the illumination light distribution Y1 and the illumination light distribution Y2 are smaller than a predefined value.

In addition, the first correction coefficient calculation unit 5022 and the second correction coefficient calculation unit 5025 may respectively set the correction coefficient α and the correction coefficient β so that the output coefficient γ and a product of the correction coefficient α and the correction coefficient β become 1 or greater in regions of pixels in which gradation values of the illumination light distribution Y1 and the illumination light distribution Y2 are smaller than respective medians. Each of the medians is a middle value between the maximum value and the minimum value of the gradation values of each of the illumination light distribution Y1 and the illumination light distribution Y2.

As mentioned above, the first correction coefficient calculation unit 5022 and the second correction coefficient calculation unit 5025 set the output coefficient γ, and the correction coefficient α and the correction coefficient β in an interlocking manner. Consequently, since the luminance of an output image is increased, or the luminance of the output image is prevented from being reduced, it is possible to prevent a phenomenon that the entire image is extremely darkened and thus cannot be visually recognized.

The first correction coefficient calculation unit 5022 and the second correction coefficient calculation unit 5025 may respectively set the correction coefficients α and β so that an average luminance when a light amount of the illumination device is set to a value smaller than a reference value is the same as or higher than an average luminance when a light amount of the illumination device is set to the reference value.

The second correction coefficient calculation unit 5025 outputs the calculated correction coefficient β to the second gradation conversion unit 5026.

The second gradation conversion unit 5026 performs a gradation conversion process on the first gradation-converted image signal which is input from the first gradation conversion unit 5023 by using the correction coefficient β which is input from the second correction coefficient calculation unit 5025, so as to generate a second gradation-converted image signal. The second gradation conversion unit 5026 outputs the second gradation-converted image signal generated through the gradation conversion process to the image display unit 141 as the output image signal T5.

As described in the first embodiment, the second region in the second illumination light distribution calculation unit 5024 is smaller than the first region in the first illumination light distribution calculation unit 5021. For this reason, the second gradation conversion unit 5026 performs the gradation conversion in consideration of the region smaller than the region in which the first gradation conversion unit 5023 has performed the gradation conversion while maintaining the local contrast. Consequently, the local contrast in the output image is emphasized. For example, a pixel region (second region) averaged by the second illumination light distribution calculation unit 5024 becomes smallest when there is no peripheral pixel within a predefined region from a focused pixel and averaging is not performed. In this case, correction coefficients β of the respective pixels are determined only by the brightness of the focused pixel, and are not influenced by the brightnesses of peripheral pixels (adjacent pixels). Therefore, if brightnesses of the adjacent pixels are considerably different from each other, correction coefficients β are also different from each other, and the brightnesses of the pixels are similar to each other, the correction coefficients β are also similar to each other. Since the second region is smaller than the first region, and the correction coefficients β monotonously increase according to the gradation values of the illumination light distribution Y2, the local contrast is emphasized.

The first correction coefficient calculation unit 5022 and the second correction coefficient calculation unit 5025 may respectively set the correction coefficient α and the correction coefficient β so that a difference between the correction coefficient α and the correction coefficient β increases as an average luminance or a variance indicated by the image analysis result R1 input from the image analysis unit 503 becomes smaller. Consequently, a degree of contrast emphasis in an output image is increased. Thus, the illumination perceived by the user becomes bright. For example, in cases where the correction coefficients α and β are respectively 1.5 and 0.8, and the correction coefficients α and β are respectively 2.0 and 0.6, both products of the correction coefficients α and β are 1.2. Average values of signal values of the output image signals T5 obtained by performing gradation conversion in both of the cases are approximately equivalent to each other. In contrast, a degree of contrast emphasis is higher in the latter case than in the former case, and thus the visibility is improved.

### (Calculation Example of Correction Coefficients α and β)

Next, a description will be made of a configuration example for calculating the correction coefficients α and β in the first correction coefficient calculation unit 5022 and the second correction coefficient calculation unit 5025.

A look-up table (LUT) used to calculate the correction coefficient α is stored in the first correction coefficient calculation unit 5022 in advance. The LUT is information in which an input value and an output value are correlated with each other. An application thereof is not limited to conversion of a signal value. In the LUT stored in the first correction coefficient calculation unit 5022, a gradation value of the illumination light distribution Y1 as the input value is correlated with the correction coefficient α as the output value. Therefore, the first correction coefficient calculation unit 5022 may read a correction coefficient α corresponding to an input gradation value of the illumination light distribution Y1 from the LUT, and may output the read correction coefficient α to the first gradation conversion unit 5023.

A plurality of LUTs may be stored in the first correction coefficient calculation unit 5022. Among the LUTs, magntitudes of correction coefficients α as output values correlated with input values are different from each other. In other words, among the LUTs, degrees of brightnesses of output pixels to be changed through gradation conversion are different from each other.

Here, the first correction coefficient calculation unit 5022 selects one of the plurality of LUTs on the basis of the statistics as the image analysis result R1 which is input from the image analysis unit 503 or the output coefficient γ indicated by the illumination device control signal C1 input from the illumination device control unit 501. For example, in a case where an average luminance is lower than a predefined value, the number of pixels of a dark region is larger than a predefined value, a luminance distribution in the luminance histogram is biased to a region smaller than a predefined value, or the output coefficient γ is smaller than a predefined value, the first correction coefficient calculation unit 5022 selects an LUT which causes the dark region to become brighter. The LUT which causes the dark region to become brighter is, for example, an LUT in which a gradation value (dark region) of the illumination light distribution Y1 which is smaller than a predefined value is correlated with a correction coefficient α which is greater than 1 and is smaller than a predefined value.

In a case where the average luminance is higher than the predefined value, the number of pixels of a dark region is smaller than the predefined value, the luminance distribution in the luminance histogram is biased to a region greater than the predefined value, the output coefficient γ is smaller than a reference value and is greater than the predefined value, the first correction coefficient calculation unit 5022 selects an LUT which causes the dark region to become slightly bright. The LUT which causes the dark region to become brighter is, for example, an LUT in which a gradation value (dark region) of the illumination light distribution Y1 which is smaller than a predefined value is correlated with a correction coefficient α which is greater than 1 and is smaller than a predefined value. In addition, the correction coefficient α is a smaller value than the correction coefficient α corresponding to the LUT which causes a dark region to become brighter in the gradation value of the same illumination light distribution Y1.

The second correction coefficient calculation unit 5025 selects one of the plurality of LUTs on the basis of the image analysis result R1 which is input from the image analysis unit 503, and the illumination device control signal C1 which is input from the illumination device control unit 501 or the LUT selected by the first correction coefficient calculation unit 5022. Referring to the LUT selected by the first correction coefficient calculation unit 5022 is aimed at referring to the correction coefficient α in addition to the output coefficient γ when setting the correction coefficient β as described above.

For example, in a case where a contrast of the first gradation-converted image signal is low, the number of high frequency components thereof is small, there is a bias in the luminance histogram, or the number of high gradation regions is large, the second correction coefficient calculation unit 5025 selects an LUT which causes a local contrast to be considerably emphasized. Here, the image analysis unit 503 may calculate statistics for the first gradation-converted image signal generated by the first gradation conversion unit 5023 instead of the input image signal S2. Whether or not the contrast is low is determined on the basis of, for example, whether or not a difference between the maximum value and the minimum value of gradation values within a predefined range is smaller than a predefined value. Whether or not the number of high frequency components is small is determined on the basis of whether or not a ratio (power ratio) of a power value of a high frequency component higher than a predefined spatial frequency to a power value of a low frequency component lower than the predetermined spatial frequency is lower than a predefined value. Whether or not there is a bias in the luminance histogram is determined on the basis of whether or not a ratio of the maximum value to the minimum value of frequencies for each of luminance ranges which are separated at constant intervals is higher than a predefined value. Whether or not the number of high gradation regions is large is determined on the basis of whether or not a proportion of pixels of which gradation values (signal values) are greater than a predefined value is higher than a predefined ratio.

The LUT which causes the local contrast to be considerably emphasized is, for example, an LUT in which an increasing rate of the correction coefficient P due to an increase in a gradation value of a high gradation region is considerably high. The reason to select the LUT which causes the local contrast to be considerably emphasized in a case where there are a large number of high gradation regions in the input image is that the visibility is not degraded even if the luminance is reduced as a result of a light amount of the illumination device being reduced more than the reference value.

In a case where the contrast is high, the number of high frequency components thereof is large, or there is no bias in the luminance histogram, the second correction coefficient calculation unit 5025 selects an LUT which causes the local contrast to be slightly emphasized. The LUT which causes the local contrast to be slightly emphasized is, for example, an LUT in which an increasing rate of the correction coefficient β due to an increase in a gradation value of a high gradation region is considerably low. An increasing rate of the correction coefficient β due to an increase in a gradation value of a high gradation region in this LUT is lower than the above-described increasing rate of the correction coefficient β due to an increase in a gradation value of a high gradation region in the LUT which causes the local contrast to be considerably emphasized.

Therefore, the first correction coefficient calculation unit 5022 and the second correction coefficient calculation unit 5025 can respectively select LUTs for realizing preferable gradation conversion on the basis of the statistics of gradation values, obtained by analyzing the input image signal S2 or the first gradation-converted image signal.

The above-described LUTs may be stored in a calculation method storage unit (not illustrated) provided in the image display device 140, separately from the first correction coefficient calculation unit 5022 or the second correction coefficient calculation unit 5025. In this case, the first correction coefficient calculation unit 5022 selects an LUT from the calculation method storage unit in accordance with the statistics or the output coefficient γ, and reads a correction coefficient α or β corresponding to a gradation value from the selected LUT.

The first correction coefficient calculation unit 5022 and the second correction coefficient calculation unit 5025 may respectively select LUTs on the basis of a user's input operation, and may use a correction coefficient α or P related to the selected LUTs. In addition, the illumination device control unit 501 may select an output coefficient γ on the basis of a user's input operation. In this case, the first correction coefficient calculation unit 5022 may set a correction coefficient α on the basis of the selected output coefficient γ, and the second correction coefficient calculation unit 5025 may set a correction coefficient β by using the selected output coefficient γ and a correction coefficient α calculated by the first correction coefficient calculation unit 5022 as described above.

### (Adjustment of Averaged Region)

The above description has been made on the premise that a pixel region (second region) in which signal values of pixels included in the first gradation-converted image signal are averaged is fixed in the second illumination light distribution calculation unit 5024, but the pixel region may be variable depending on the image analysis result R1.

As described above, the image analysis unit 503 calculates statistics for the first gradation-converted image signal which is input from the first gradation conversion unit 5023, and outputs the calculated statistics to the second illumination light distribution calculation unit 5024.

A plurality of second regions having different sizes (for example, the number of pixels) are stored in advance in the second illumination light distribution calculation unit 5024. For example, in a case where a contrast of the first gradation-converted image signal is low, the number of high frequency components thereof is small, or there is a bias in the luminance histogram, the second illumination light distribution calculation unit 5024 selects a smaller second region. Consequently, it is possible to obtain an output image in which a contrast is emphasized up to a high frequency component, through gradation conversion. For example, in a case where a contrast of the first gradation-converted image signal is high, the number of high frequency components thereof is large, or there is no bias in the luminance histogram, the second illumination light distribution calculation unit 5024 selects a larger second region. Consequently, it is possible to obtain an output image in which a contrast in a high frequency component is maintained, and a degree of emphasis is minimized, through gradation conversion. Therefore, it is possible to adjust a degree of contrast emphasis of a high frequency component in accordance with a distribution of signal values of the first gradation-converted image and thus to improve the visibility of output pixels.

In the above description, the description has been made of a case where the first illumination light distribution calculation unit 5021 calculates the single illumination light distribution Y1, and the second illumination light distribution calculation unit 5024 calculates the single illumination light distribution Y2, as an example, but, the present embodiment is not limited thereto. For example, the first illumination light distribution calculation unit 5021 may calculate a plurality of illumination light distributions Y1, and the second illumination light distribution calculation unit 5024 may calculate a plurality of illumination light distributions Y2. The number of illumination light distributions may be, for example, two. The first correction coefficient calculation unit 5022 may calculate an average value of all or some correction coefficients α calculated on the basis of the respective illumination light distributions Y1, and the first gradation conversion unit 5023 may perform gradation conversion by using the calculated average value. The second correction coefficient calculation unit 5025 may calculate an average value of all or some correction coefficients β calculated on the basis of the respective illumination light distributions Y2, and the second gradation conversion unit 5026 may perform gradation conversion by using the calculated average value.

In a case where the first illumination light distribution calculation unit 5021 calculates a plurality of illumination light distributions Y1, the smallest first region in the plurality of illumination light distributions is referred to as a first reference image region. The second illumination light distribution calculation unit 5024 sets a pixel region (second region) in which signal values of the pixels are averaged when calculating the illumination light distribution Y2 is smaller than the first reference image region. In a case where a plurality of illumination light distributions Y2 are calculated, the largest second region in the plurality of illumination light distributions is referred to as a second reference image region. Therefore, the second reference image region is set to be smaller than the first reference image region.

The first illumination light distribution calculation unit 5021 can adjust a size of a region in which the local contrast is maintained through gradation conversion by selecting all or some of the first regions having different sizes. As described above, the first illumination light distribution calculation unit 5021 may select a first region on the basis of the statistics which is input from the image analysis unit 503. Since the correction coefficient α approximately becomes similar to a constant value in the first region, and the correction coefficient α in a dark region has a value greater than the correction coefficients α in other regions, the contrast is maintained in a smaller region through the gradation conversion performed by the first gradation conversion unit 5023. For this reason, the visibility is improved even in a small dark region.

On the other hand, the second illumination light distribution calculation unit 5024 can adjust a spatial frequency for emphasizing the local contrast through the gradation conversion by selecting all or some of the second regions having different sizes. As described above, the second illumination light distribution calculation unit 5024 may select a second region on the basis of the statistics which is input from the image analysis unit 503. Since, in a region larger than the second region, the correction coefficient β meaningfully varies, and thus the contrast is emphasized, it is possible to emphasize the local contrast in a smaller region through the gradation conversion performed by the second gradation conversion unit 5026. The correction coefficient β for a gradation value near zero reduces a gradation value in the gradation conversion, and is thus preferable from the viewpoint of not excessively emphasizing noise distributed near a zero gradation value.

The first illumination light distribution calculation unit 5021 and the second illumination light distribution calculation unit 5024 may not select the first region and the second region but may change sizes thereof on the basis of the statistics which is input from the image analysis unit 503.

The first illumination light distribution calculation unit 5021 may change a size of the first region in accordance with a resolution of the input image signal S2. Here, the first illumination light distribution calculation unit 5021 sets the number of pixels of one side of the first region to be proportional to, for example, the resolution of the input image signal S2, that is, the number of pixels of one side of a display region. Similarly, the second illumination light distribution calculation unit 5024 may change a size of the second region in accordance with a resolution of the first gradation-converted image signal. Here, the second illumination light distribution calculation unit 5024 sets the number of pixels of one side of the second region to be proportional to, for example, the resolution thereof. Consequently, sizes of local regions in which contrasts are maintained or emphasized are the same as each other regardless of a resolution of an input image, and thus an effect of improving image quality can be made equivalent.

### (Determination Method of Output Coefficient γ)

Next, a description will be made of a method of determining the output coefficient γ in the illumination device control unit 501.

As described above, the illumination device control unit 501 determines the output coefficient γ on the basis of the statistics indicated by the image analysis result R1 which is input from the image analysis unit 503. For example, the illumination device control unit 501 sets the output coefficient γ to a greater value as an average value of signal values of an input image becomes greater. The illumination device control unit 501 sets the output coefficient γ to a smaller value as an average value of signal values of an input image becomes smaller. Here, the set output coefficient γ is a real number between 0 and 1. Consequently, in a case where signal values of the input image signal S2 are great, and a light amount of the illumination device is set to be smaller than the reference value, it is possible to minimize a problem that the luminance of an image displayed on the image display unit 141 is reduced despite the gradation conversion being performed.

The illumination device control unit 501 may set the output coefficient γ on the basis of a gradation histogram. For example, in a case where the number of pixels of a high gradation region and a low gradation region is larger than the number of pixels of an intermediate region (intermediate gradation region) thereof, the illumination device control unit 501 sets the output coefficient γ to a value within a predefined range from a value for giving a reference value of a light amount. Consequently, since a reduction in the maximum value of luminances is minimized, it is possible to reduce deterioration in image quality which is mainly caused by the high gradation region which supplies high luminances. Also in a case where an average value of signal values is the same as or similar to that in this case, the illumination device control unit 501 sets the output coefficient γ to a smaller value as the number of pixels of the intermediate gradation region becomes larger. Despite a light amount of the illumination device being reduced more than the reference value, it is possible to emphasize the local contrast and to perform gradation conversion without reducing the maximum value of luminances. This is preferable from the viewpoint of reducing power consumption without degrading the visibility.

As described above, in the present embodiment, an average value of brightnesses in the first region which is a predetermined region centering on a certain pixel is calculated for each pixel of an input image so that the first illumination light distribution indicating a distribution of illumination light intensities in the input image is calculated, and a gradation value of each pixel of the input image is converted on the basis of the first illumination light distribution and the first correction coefficient which monotonously decrease relative to the illumination light intensity when the illumination light intensity is higher than a predetermined threshold value. In addition, in the present embodiment, an average value of brightnesses in the second region smaller than the first region, which is a predetermined region centering on a certain pixel is calculated for each pixel of an image converted from the input image so that the second illumination light distribution indicating a distribution of illumination light intensities in the gradation-converted image is calculated, and a gradation value of each pixel of the converted image is converted on the basis of the second illumination light distribution and the second correction coefficient which monotonously decrease relative to the illumination light intensity. In the present embodiment, the first correction coefficient and the second correction coefficient are calculated so that a product of the first correction coefficient and the second correction coefficient increases according to a decrease in the output coefficient related to a light amount of the illumination portion provided in the image display unit which displays an image.

Consequently, the local contrast of an image signal is emphasized and the visibility of a dark region is improved through gradation conversion. Even if a light amount of the illumination device is reduced more than the reference value, it is possible to obtain the same visibility as in a case where the light amount is the same as the reference value, and thus to reduce power consumption.

### (Sixth Embodiment)

Next, a sixth embodiment of the present invention will be described.

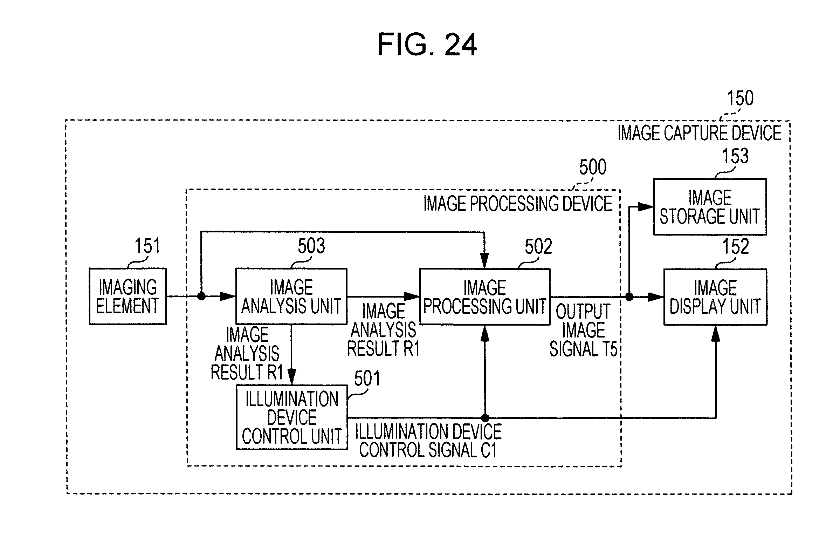

Fig. 24 is a schematic diagram illustrating a configuration of an image capture device 150 according to the present embodiment. The same constituent elements as those of the image display device 140 (refer to Fig. 17) of the fifth embodiment are given the same reference numerals, and description thereof is applied by analogy.

The image capture device 150 is configured to include an imaging element 151, an image display unit 152, and an image storage unit 153 in addition to the image processing device 500.

The imaging element 151 captures an image of a subject, and generates an original image signal indicating the captured image. The imaging element 151 is constituted by an imaging device such as a charge coupled device (CCD). The imaging element 151 performs a general image process such as a de-mosaic process on the generated image signal, and outputs a generated signal to the image processing unit 502 and the image analysis unit 503 of the image processing device 500 as the input image signal S2. The de-mosaic process is a process of generating an image signal indicating a color image by complementing the original image signal with color information which is not present in the original image signal.

The image display unit 152 receives the illumination device control signal C1 from the illumination device control unit 501 and also receives the output image signal T5 from the image processing unit 502. The image storage unit 153 adjusts a light amount of the illumination device on the basis of the output coefficient γ indicated by the illumination device control signal C1 and displays an image indicated by the output image signal T5.

The image storage unit 153 stores the output image signal T5 which is input from the image processing unit 502. The image storage unit 153 is constituted by a storage device such as a flash memory or a hard disk.

Consequently, it is possible to implement the image capture device 150 which can capture a high quality image which has high visibility by improving the visibility of a dark region and also improving the local contrast. The image capture device 150 may perform general image processes such as gamma correction, color conversion, and contour emphasis on the output image signal T5 output from the image processing unit 502.

The above-described first correction coefficient calculation unit 5022 and second correction coefficient calculation unit 5025 may be integrally configured as a correction coefficient calculation unit. The first correction coefficient calculation unit 5022 may be included as a part of the first gradation conversion unit 5023. In addition, the second correction coefficient calculation unit 5025 may be included as a part of the second gradation conversion unit 5026.

As described above, according to the present embodiment, it is possible to achieve the same effects as in the fifth embodiment.

### (Seventh Embodiment)

Next, a seventh embodiment of the present invention will be described.

A schematic configuration of an image display device (not illustrated) according to the present embodiment is the same as that of the image display device 140 (refer to Fig. 17). However, the image display unit 141 (refer to Fig. 17) according to the present embodiment includes a plurality of light sources as the illumination device. The image display unit 141 can separately control a light amount radiated by each light source for each of a plurality of regions into which a display surface for displaying an image is divided.

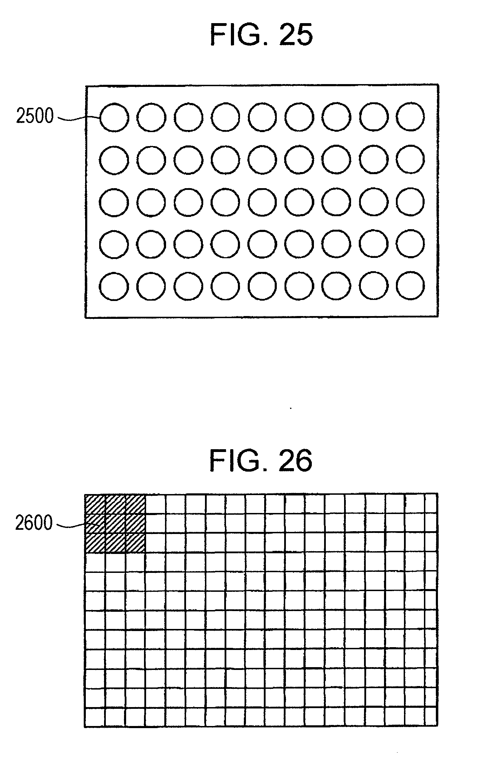

Fig. 25 is a diagram illustrating an arrangement example of light sources of the illumination device according to the present embodiment.

In Fig. 25, an outer frame of a transversely long rectangular shape respectively indicates an outer frame of the illumination device.

Circles arranged in the two-dimensional plane inside the outer frame indicate the light sources. A light source 2500 at an upper left end of the outer frame is one of the plurality of light sources included in the illumination device.

In the present embodiment, a light amount may be separately controlled for each light source, and may be controlled for a plurality of light sources of a predetermined number. The plurality of light sources may be disposed on one-dimensional line segments at all vertical and horizontal edges or some thereof of the illumination device.

Fig. 26 is a diagram illustrating an arrangement example of pixels of the image display unit 141 according to the present embodiment.

In Fig. 26, an outer frame of a transversely long rectangular shape indicates an outer frame of an image display surface of the image display unit 141. Fine squares arranged in the two-dimensional plane inside the outer frame respectively indicate the pixels. A hatched region 2600 at an upper left end of Fig. 26 is a region corresponding to the light source 2500 of which a light source can be controlled separately. In other words, the region 2600 is a region to which light is mainly supplied from the light source 2500. The brightness of an image displayed in the region 2600 is mainly controlled by a light amount of the light source 2500.

Therefore, in the present embodiment, the illumination device control unit 501 (refer to Fig. 17) determines a light amount for each light amount control region. The light amount control region indicates a region corresponding to each of the units of light sources of which light amounts can be controlled separately. In other words, the light amount control region corresponds to each of a plurality of partial regions into which a display region for displaying an image is divided. The illumination device control unit 501 calculates an illumination light distribution for each light amount control region, for example, on the basis of the input image signal S2 which is input to the image processing device 500. The illumination device control unit 501 calculates, as the illumination light distribution, a gradation value which is obtained by averaging signal values belonging to the respective light amount control regions. The illumination device control unit 501 sets a greater output coefficient γ as the calculated illumination light distribution becomes larger. For example, in a case where the calculated illumination light distribution is larger than a predefined value, the illumination device control unit 501 sets the output coefficient γ so that a light amount of the light source related to the light amount control region is larger than a reference value. In a case where the calculated illumination light distribution is smaller than a predefined value, the illumination device control unit 501 sets the output coefficient γ so that a light amount of the light source related to the light amount control region is smaller than a reference value.

However, in a case where the reference value is the predefined maximum value, and the calculated illumination light distribution is larger than the predefined value, the illumination device control unit 501 sets the output coefficient γ so that a light amount of the light source related to the light amount control region is the reference value.

In other words, in the image processing unit 502 (refer to Fig. 23), the first correction coefficient calculation unit 5022 calculates the correction coefficient α on the basis of the illumination light distribution Y1 of the input image signal S2 and the correction coefficient γ set for each light amount control region, and the first gradation conversion unit 5023 performs gradation conversion on the input image signal S2 by using the correction coefficient α. In addition, the second correction coefficient calculation unit 5025 calculates the correction coefficient P on the basis of the illumination light distribution Y2 of the first gradation-converted signal and the correction coefficient γ set for the light amount control region, and the second gradation conversion unit 5026 performs gradation conversion on the first gradation-converted signal by using the correction coefficient β.

A light amount of the illumination device is smaller than the reference value in the light amount control region in which the illumination light distribution calculated by the illumination device control unit 501 is small, but the image processing unit 502 performs the gradation conversion on the region, and thus an image of which the local contrast is emphasized and the visibility is favorable is displayed on the image display unit 152.

### (Power Consumption)

Next, a description will be made of power consumption of the image display device 140 according to the present embodiment.

In the present embodiment, light amounts of the light sources included in the illumination device are separately controlled in each of the plurality of light amount control regions, and a gradation process is performed by the image processing unit 502. It is possible to reduce power consumption more than in a case of uniformly controlling light amounts of all light sources, without degrading the visibility. In the present embodiment, this is because it is possible to reduce a light amount of a light source related to a light amount control region in which gradation values of the illumination light distribution are small.

Generally, in a case where signal values of the input image signal S2 are great, a luminance becomes lower than an expected luminance even if gradation conversion is performed when a light amount of the light source is too reduced. For this reason, if a light amount of the light source is excessively reduced, there is a concern that the visibility may be degraded. In a case where light amounts of all the light sources are uniformly controlled, the light amounts of all the light sources cannot be excessively reduced, and thus an amount of power consumption to be reduced is restricted.

In contrast, in the present embodiment, a reduction in a light amount is minimized in a light amount control region (bright region) in which gradation values of the illumination light distribution are great, and a light amount is sufficiently reduced in a light amount control region (dark region) in which gradation values of the illumination light distribution are small. Consequently, whereas a high luminance state is maintained in the bright region, a light amount of a light source corresponding to the dark region is more considerably reduced.

The illumination device control unit 501 may set the output coefficient γ on the basis of a contrast in the light amount control region. The output coefficient γ is a parameter for controlling a light amount of the light source as described above. Here, the illumination device control unit 501 calculates index values indicating a degree of the local contrast on the basis of gradation values of the input image signal S2 for each light amount control region. The index values include, for example, a difference between the maximum value and the minimum value of gradation values, and a variance of the gradation values. The illumination device control unit 501 sets an output coefficient γ for reducing a larger light amount of the light source as a local contrast indicated by the calculated index values becomes higher. Even if gradation values of the illumination light distributions are the same as each other, a light amount of the light source is smaller in a light amount control region in which the local contrast is high than in a light amount control region in which the local contrast is low. For this reason, it is possible to reduce a light amount of the light source and thus to reduce power consumption while maintaining the visibility of an output image for each light amount control region.

Generally, the luminance increases as a gradation value becomes greater or a light amount of the light source becomes larger. Here, an example of a luminance of an output pixel will be described.

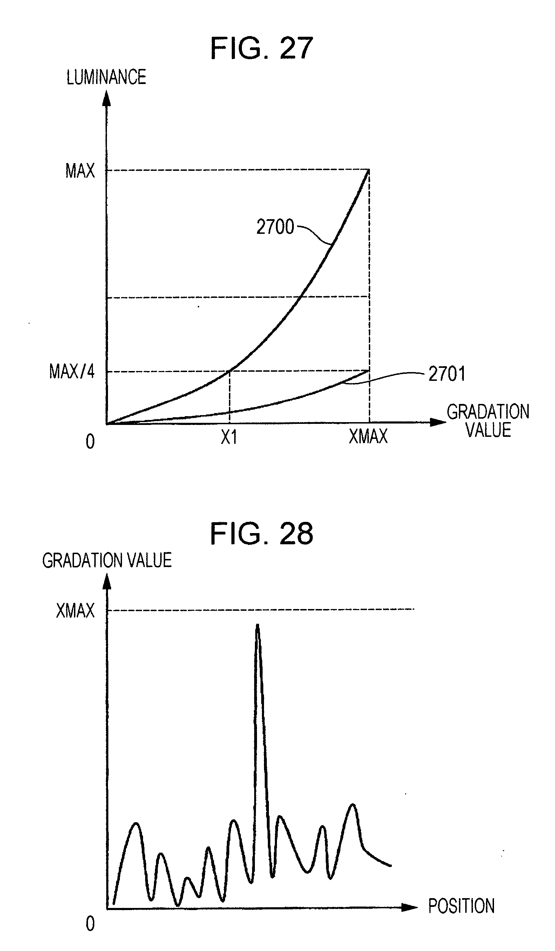

Fig. 27 is a conceptual diagram illustrating an example of luminances of an output image.

In Fig. 27, a transverse axis expresses gradation values, and a longitudinal axis expresses luminances. In Fig. 27, a curve 2700 is a curve indicating luminances in a case where a light amount is a reference value. Luminances indicated by the curve 2700 correspond to expected luminances. A curve 2701 indicates luminances in a case where a light amount is 1/4 of the reference value. Here, a gradation value X1 is a gradation value which causes MAX/4 to be obtained as a value of the luminance in a case where a light amount is the reference value. MAX is a value of the luminance obtained in a case where a light amount is the reference value, and a gradation value is the maximum value XMAX. Also in a case where a light amount is 1/4 of the reference value, and a gradation value is the maximum value XMAX, MAX/4 can be obtained as a value of the luminance. In other words, Fig. 27 illustrates that, even if a light source is reduced to 1/4 of the reference value, the gradation value X1 is converted into the maximum value XMAX, and thus MAX/4 can be obtained as an expected luminance.

However, as described above, a region in which the local contrast is high, particularly, a pixel of which a gradation value is greater than gradation values of peripheral pixels is perceived as being bright due to the human visual characteristic. Here, an example of gradation values of the output image signal T5 will be described.

Fig. 28 is a conceptual diagram illustrating an example of gradation values of the output image signal T5.

In Fig. 28, a transverse axis expresses positions of pixels, and a longitudinal axis expresses gradation values thereof. An origin is one point on the image display surface of the image display unit 141, for example, an upper left end. A gradation value which is considerably greater than other gradation values are illustrated at a central part of Fig. 28. In contrast, the other gradation values have smaller values close to 0 than the maximum value XMAX. In other words, the distribution of the gradation values illustrated in Fig. 28 shows that a pixel having the gradation value which is considerably greater than the other gradation values is included in a dark region. In this case, if a light amount of the light source is reduced, the pixel having the great gradation value is displayed with a luminance lower than an expected luminance. However, a difference between this gradation value and the peripheral gradation values, that is, the local contrast is high. For this reason, the pixel having the great gradation value is perceived as being bright by a human visual sense.

As mentioned above, according to the present embodiment, the first correction coefficient and the second correction coefficient are calculated on the basis of output coefficients calculated for a plurality of respective partial regions into which the display region for displaying an image is divided. In other words, an illumination light distribution is calculated on the basis of an image signal for each of regions which respectively correspond to a plurality of light sources of which light amounts can be controlled separately, and controls a light amount on the basis of the calculated illumination light distribution. In addition, gradation conversion is performed on the basis of the calculated illumination light distribution. Consequently, the local contrast of an output image can be emphasized, and the visibility of a dark region can be improved even if a light amount of the light source is reduced more than the reference value. The light amount of the light source is reduced, and thus it is possible to further reduce power consumption.

### (Eighth Embodiment)

Next, an eighth embodiment of the present invention will be described.

A description will be made of a configuration of an image display device 160 according to the present embodiment.

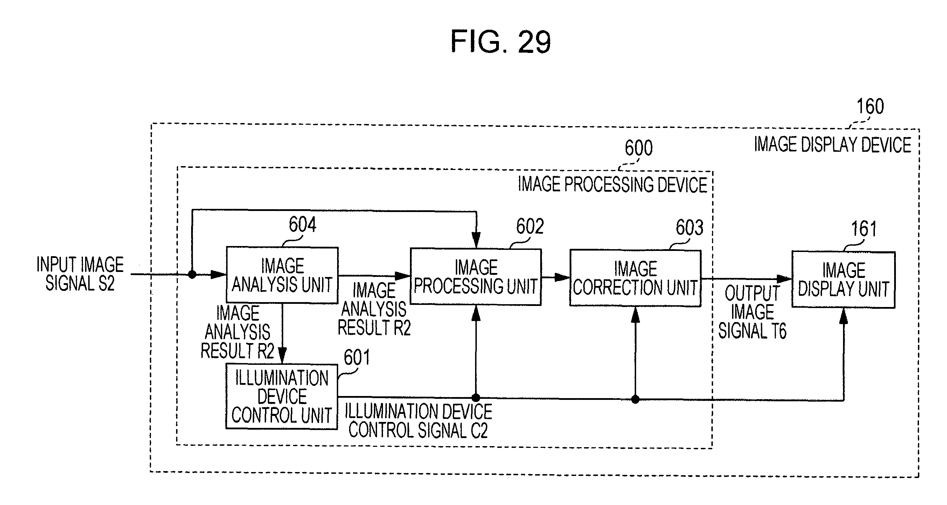

Fig. 29 is a schematic diagram illustrating a configuration of the image display device 160 according to the present embodiment.

The image display device 160 is configured to include an image processing device 600 and an image display unit 161. The image processing device 600 includes an illumination device control unit 601, an image processing unit 602, an image correction unit 603, and an image analysis unit 604.

The image processing unit 602 and the image analysis unit 604 respectively have the same configurations as those of the image processing unit 502 and the image analysis unit 503 (refer to Fig. 17). The illumination device control unit 601 sets light amounts of a plurality of light sources included in an illumination device on the basis of statistics indicated by an image analysis result R2 which is input from the image analysis unit 604 in the same manner as the illumination device control unit 501 according to the seventh embodiment. The illumination device control unit 601 sets an output coefficient γ for obtaining a light amount which is set for each of a plurality of light sources which can be controlled separately. The illumination device control unit 601 outputs an illumination device control signal C2 indicating the output coefficient γ to the image processing unit 602, the image display unit 161, and the image correction unit 603.

Hereinafter, differences from the above-described embodiments will be described.

The image correction unit 603 performs a correction process on an output image signal which is input from the image processing unit 602 on the basis of the illumination device control signal C2 which is input from the illumination device control unit 601. The correction process performed by the image correction unit 603 is a process of reducing unevenness of luminances of an output image displayed on the image display unit 161 when the output image signal output from the image processing unit 602 is directly input thereto. The "unevenness of luminances" is a variation in luminances caused by a positional relationship between a light source and a pixel corresponding to a light amount control region, and indicates that description thereof cannot be made only by using gradation values of the pixels. An example of the "unevenness of luminances" or a process of reducing the "unevenness of luminances" will be described later. The image correction unit 603 outputs an output image signal T6 corrected through the correction process to the image display unit 161.

### (Example of Luminances of Output Image Signal)

Here, a description will be made of an example of gradation values of the output image signal which is input from the image processing unit 602.

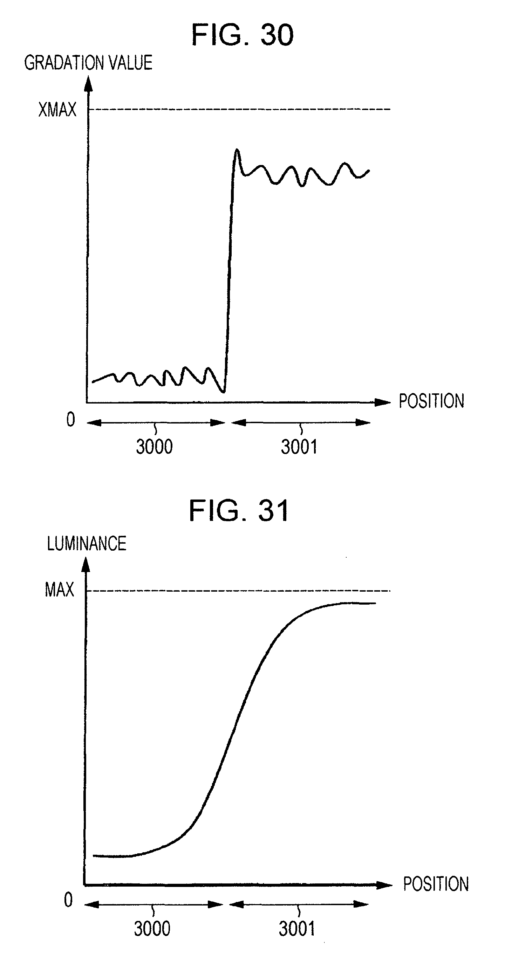

Fig. 30 is a conceptual diagram illustrating another example of gradation values of the output image signal.

In Fig. 30, a transverse axis expresses positions of the pixels, and a longitudinal axis expresses gradation values thereof. Two bidirectional arrows located directly under the transverse axis respectively indicate light amount control regions 3000 and 3001. The light amount control regions 3000 and 3001 are disposed so as to be adjacent to each other. In other words, the pixels expressed by the transverse axis are included in either one of the light amount control regions 3000 and 3001.

In the example illustrated in Fig. 30, gradation values of the pixels included in the light amount control region 3000 are values closer to zero than the maximum value XMAX. In contrast, gradation values of the pixels included in the light amount control region 3001 are values closer to the maximum value XMAX than zero. There is a considerable difference in the gradation value between the light amount control regions 3000 and 3001.

Next, a description will be made of an example of luminances of the illumination device.

Fig. 31 is a conceptual diagram illustrating an example of luminances of the illumination device.

In Fig. 31, a transverse axis expresses positions of the pixels, and a longitudinal axis expresses luminances of the illumination device. Two bidirectional arrows located directly under the transverse axis respectively indicate the above-described light amount control regions 3000 and 3001.

The luminances in this example show a luminance distribution of the illumination device obtained in a case where a light amount of the light source related to the light amount control region 3001 is larger than a light amount of the light source related to the light amount control region 3000. The luminances illustrated in Fig. 31 smoothly change at a boundary between the light amount control regions 3000 and 3001 since the light amounts are different from each other between the light amount control regions 3000 and 3001. This change is smoother than the change in the gradation values illustrated in Fig. 30. In other words, the luminance of the illumination device around the boundary is influenced by light radiated from light sources related to a plurality of adjacent light amount control regions, and thus causes a smooth change in the luminances around the boundary between the light amount control regions. This change in the luminances corresponds to the "unevenness of the luminances".

Next, a description will be made of another example of luminances of an output image.

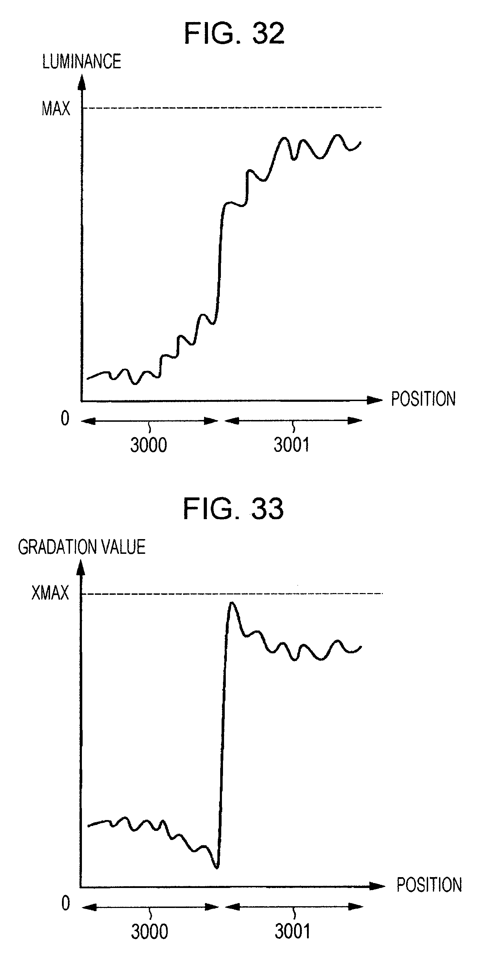

Fig. 32 is a conceptual diagram illustrating an example of luminances of an output image.

In Fig. 32, a longitudinal axis expresses luminances of the output image, and a transverse axis expresses positions of pixels. Two bidirectional arrows located directly under the transverse axis respectively indicate the above-described light amount control regions 3000 and 3001 in the same manner as in Figs. 30 and 31. In this example, a light amount of each light source is the same as that in the example illustrated in Fig. 31, an output image signal is the same as that in the example illustrated in Fig. 30.

In the luminances illustrated in Fig. 32, a degree of a change in values thereof is most notable at the boundary between the light amount control regions 3000 and 3001. However, this change in the values is smoother than the change in the gradation values illustrated in Fig. 30. This smooth change in the luminances occurs as the "unevenness of the luminances".

Therefore, the image correction unit 603 performs the correction process so that, for example, a difference between the gradation values over the boundary of the light amount control regions is emphasized. Consequently, an influence of light radiated by light sources related to the adjacent light amount control regions is reduced. For this reason, the "unevenness of the luminances" caused by the difference in the light amount between the light amount control regions is reduced.

Next, a description will be made of an example of gradation values of the corrected output image signal T6.

Fig. 33 is a conceptual diagram illustrating an example of gradation values of the corrected output image signal T6.

In Fig. 33, a longitudinal axis, a transverse axis, arrows located directly under the transverse axis are respectively the same as those in Fig. 30.

The gradation values illustrated in Fig. 33 are gradation values of the signal generated by performing the correction process on the output image signal having the gradation values illustrated in Fig. 30. In Fig. 33, the gradation values included in the light amount control region 3000 decrease when coming closer to the boundary with the light amount control region 3001. In contrast, the gradation values included in the light amount control region 3001 increase when coming closer to the boundary with the light amount control region 3000. As a result, a difference between the gradation values over the boundary between the light amount control regions 3000 and 3001 is emphasized. Here, an average value of the gradation values over the boundary does not change much before and after the correction process.

Next, a description will be made of an example of luminances related to the corrected output image.

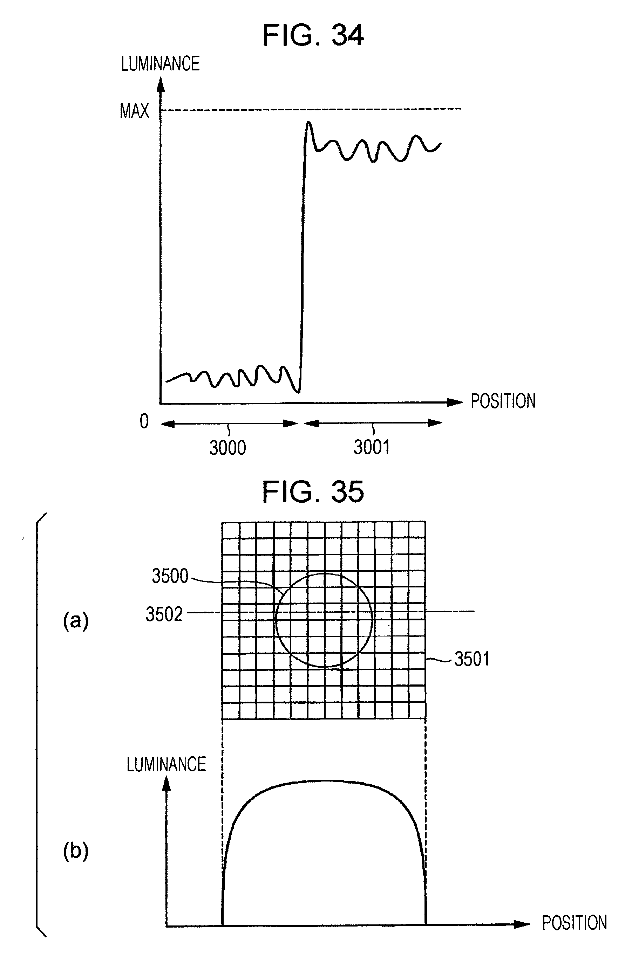

Fig. 34 is a conceptual diagram illustrating an example of luminances of a corrected output image.

In Fig. 34, a longitudinal axis, a transverse axis, arrows located directly under the transverse axis are respectively the same as those in Fig. 31.

The luminances illustrated in Fig. 34 are luminances of an output image related to the output image signal T6 illustrated in Fig. 33. In Fig. 34, a change in the luminances is rapidly made in the same manner as the change in the gradation values in Fig. 30 at the boundary between the light amount control regions 3000 and 3001. In other words, Fig. 34 illustrates that the correction process is performed so that the change in the gradation values at the boundary between the light amount control regions 3000 and 3001 is emphasized, and thus it is possible to reduce and further remove the "unevenness of the luminances" illustrated in Fig. 32. For example, the correction process can be realized by storing a correction coefficient which is obtained by converting a luminance of each pixel illustrated in Fig. 31 into a gradation value, in the image correction unit 603 in advance, and by dividing the gradation value of each pixel by the stored correction coefficient. In addition, the correction process can also be realized by storing a correction coefficient which is obtained by normalizing the gradation value of each pixel, illustrated in Fig. 33, in the image correction unit 603 in advance, and by multiplying the gradation value of each pixel by the stored correction coefficient.

In the present embodiment, luminance information indicating a relationship between a light source (a position of the light source) related to a certain light amount control region and a luminance of each pixel (a position of the pixel) may be acquired in advance. The image correction unit 603 performs a correction process on an output image signal so as to reduce "unevenness of the luminances" indicated by the luminance information. In the correction process, the image correction unit 603 performs gradation conversion on a gradation value of each pixel included in the output image signal by referring to, for example, an LUT which is stored in advance. As will be described later, there is the occurrence of a luminance difference even in a single light amount control region since intensities of light beams arriving from the light source differ depending on positions of the pixels. The luminance difference due to a difference between positions of the pixels is also a type of unevenness of luminances. In other words, in the gradation conversion, a correction coefficient for compensating for the luminance difference is acquired for each pixel in advance, and the image correction unit 603 multiplies a gradation value by the acquired correction coefficient when the gradation conversion is performed.

Here, a description will be made of an example of an arrangement of the light sources and the pixels according to the present embodiment.

Fig. 35 is a conceptual diagram illustrating an example of an arrangement of the light sources and the pixels according to the present embodiment.

Fig. 35(a) illustrates a light source 3500 and a light amount control region 3501 corresponding to the light source 3500. A plurality of fine squares included in a square indicating the light amount control region 3501 respectively indicate pixels. The light source 3500 is disposed nearly at a center of the light amount control region 3501.

Fig. 35(b) illustrates an example of luminances of the pixels. In Fig. 35(b), a transverse axis expresses positions of the pixels, and a longitudinal axis expresses luminances thereof. The luminances illustrated in Fig. 35(b) are luminances of the pixels on a line segment 3502 of Fig. 35(a). A position of each pixel in the horizontal direction in Fig. 35(b) is correlated with the position of each pixel in the horizontal direction in Fig. 35(a). In Fig. 35(b), the luminance is highest at a center of the light source 3500, and a change in the luminances is smooth in the pixels adjacent thereto. In contrast, a change in the luminances is notable and thus the luminances become close to zero in the pixels adjacent to ends of the light amount control region 3501.

Therefore, the image correction unit 603 stores in advance, as an LUT, a correction coefficient for each pixel, which gives a gradation value for providing a constant (flat) luminance regardless of a pixel (position) over all the light amount control regions under a constant gradation value and a constant light amount (an output coefficient γ; for example, 1). The image correction unit 603 reads the correction coefficient for each pixel from the stored LUT, and multiplies a gradation value of each pixel included in an output image signal by the read correction coefficient, so as to perform gradation conversion. In addition, the image correction unit 603 additionally multiplies the converted gradation value by the output coefficient γ.

In the above description, a case of the multiplication by the correction coefficient has been described as an example, but the reciprocal thereof may be stored in the image correction unit 603 instead of the above-described correction coefficient. In this case, the image correction unit 603 divides a gradation value by the stored reciprocal in the gradation conversion.

As described above, the pixels near the boundary between the light amount control regions are irradiated not only with light related to the light amount control region including the pixels but also with light radiated by light sources related to other light amount control regions. Therefore, the image correction unit 603 may combine gradation values for causing the light sources related to the other light amount control regions to provide luminance components so as to generate a combined value, and may perform gradation conversion so that the combined value provides a target luminance. Consequently, it is possible to reduce an influence of the "unevenness of the luminances" caused by the light sources related to the other light amount control regions.

Here, a description will be made of another example of an arrangement of the light sources and the pixels according to the present embodiment.

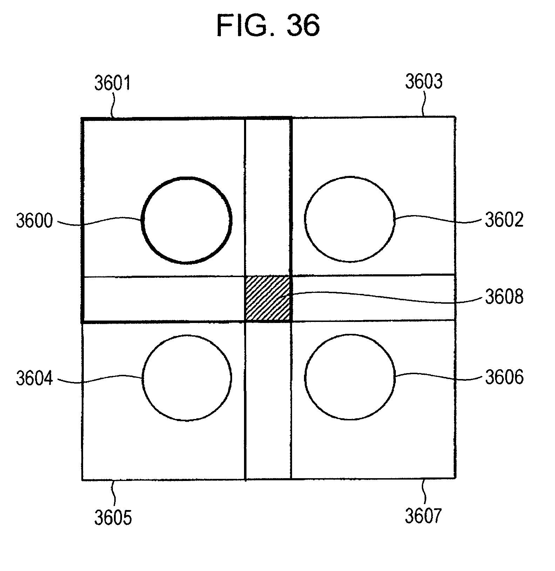

Fig. 36 is a conceptual diagram illustrating another example of an arrangement of the light sources and the pixels according to the present embodiment.

In Fig. 36, four circles respectively indicate light sources 3600, 3602, 3604 and 3606. Square regions which respectively include the four circles at their centers are light amount control regions 3601, 3603, 3605 and 3607 which respectively correspond to the light sources 3600, 3602, 3604 and 3606. Here, focusing is made on a pixel 3608 related to a small square region which is painted with diagonal lines at a lower right end of the light amount control region 3601.

The pixel 3608 is irradiated not only with light radiated by the light source 3600 related to the light amount control region 3601 including the pixel but also with light radiated by the light sources 3602, 3604 and 3606.

The image correction unit 603 measures in advance luminances provided by respective light sources related to other light amount control regions (for example, adjacent light amount control regions) within a predefined range from a focused light amount control region. The measurement is performed in advance for each pixel (focused pixel) in the focused light amount control region under a constant gradation value and a constant light amount (an output coefficient γ; for example, 1). The measured luminance (luminance component) indicates a degree of an influence of light radiated by the respective light sources related to the other light amount control regions on a luminance of the focused pixel. The image correction unit 603 stores in advance, as an LUT, a combined coefficient (correction coefficient) obtained by converting a luminance measured under a predetermined light amount into a gradation value for each pixel and each light source of the other light amount control regions. The image correction unit 603 stores a combined value and a gradation value (a target gradation value) providing a target luminance in an LUT in correlation with each other in advance. The combined value is a value obtained by converting a luminance caused by light arriving from other light amount control regions under a predetermined light amount into a gradation value.

The image correction unit 603 reads the combined coefficient for each light source of the other light amount control regions, for each pixel of the focused light amount control region, from the stored LUT. The image correction unit 603 multiplies the read correction coefficient by the output coefficient γ so as to calculate a luminance component for each light source of the other light amount control regions. The image correction unit 603 adds the calculated luminance component over the other light amount control regions so as to calculate a combined value which is a sum total thereof. The image correction unit 603 reads a target gradation value corresponding to the calculated combined value from the LUT so as to perform gradation conversion.

Consequently, since the influence of the luminance caused by each light source of the other light amount control regions is corrected to the target luminance, it is possible to reduce the "unevenness of the luminances" which tends to occur near the boundary between the light amount control regions.

The "unevenness of the luminances" of an output image may also occur in the image display device 140 (refer to Fig. 17) which uniformly controls a light amount of the illumination device. The "unevenness of the luminances" is caused by, for example, a difference in input and output characteristics between light sources, or a positional relationship between a light amount control region and a corresponding light source. Therefore, the image display device 140 may be provided with the above-described image correction unit 603, and may output an output image signal obtained by performing the above-described correction process on an output image signal generated by the image processing unit 502, to the image display unit 141.

Consequently, it is possible to reduce the "unevenness of the luminances".

In the present embodiment, the image correction unit 603 may perform the above-described correction process on the input image signal S2 so as to output the input image signal having undergone the correction process to the image processing unit 602. The image processing unit 602 outputs a generated output image signal to the image display unit 161. However, since an illumination light distribution is calculated on the basis of the input image signal having undergone the correction process, an influence of a gradation value of a pixel different from a focused pixel is exerted unlike the original input image signal S2. For this reason, as described above, the image processing unit 602 preferably performs the process on the basis of only a gradation value of the original input image signal S2.

As mentioned above, in the present embodiment, a correction coefficient indicating a relationship between a luminance caused by each light source corresponding to a partial region (a light amount control region) and a gradation value is stored in advance for each pixel, and a gradation-converted gradation value is corrected on the basis of the correction coefficient. Consequently, it is possible to reduce a change in the luminances (unevenness of the luminances) caused by a positional relationship between a light source and a pixel corresponding to a partial region, and thus to display an output image with the high visibility.

A part or the whole of each of the image processing devices 100, 200, 300, 400, 500 and 600, the image display device 110, 140 and 160, the image capture device 120 and 150, and the image printing device 130 in the above-described embodiments may be implemented by a computer. In this case, the implementation may be performed by recording a program for realizing the control function on a computer readable recording medium, and by reading and executing the program recorded on the recording medium to a computer system. In addition, the "computer system" mentioned here is a computer system built into the image display device, the image display device, the image capture device, or the image printing device, and is assumed to include an OS or hardware such as peripheral apparatuses. The "computer readable recording medium" refers to a portable medium such as a flexible disc, a magnetooptical disc, a ROM, or a CD-ROM, and a storage device such as a hard disk built into the computer system. Further, the "computer readable recording medium" may include a medium which dynamically holds the program for a short period of time, such as a communication line in a case where the program is transmitted via a network such as the Internet or a communication line such as a telephone line, and a medium which holds the program for a certain period of time, such as a volatile memory of the computer system which functions as a server or a client in that case. The program may be a program for realizing some of the above-described functions, and may be a program for realizing the above-described functions in combination with a program which has already been recorded in the computer system.

In a case of realizing the above-described first to eighth embodiments by using the program, if a reference image region is made variable during calculation of an illumination light distribution depending on an input image, this is preferable since a processing amount can be reduced. In a case where a subject with the same angle of view is imaged in the same scene, if a high resolution image is captured, the number of pixels of the subject increases, and if a low resolution image is captured, the number of pixels of the subject decreases. On the other hand, areas in which the subject occupies the image are the same as each other regardless of resolutions. In other words, a reference image region is made variable depending on the resolution of the image, an illumination light distribution can be calculated according to the area in which the subject occupies the image, and this achieves an effect of making local regions in which a contrast is maintained and is emphasized the same as each other and of being capable of equally improving image quality.

A part or the whole of each of the image processing devices 100, 200, 300, 400, 500 and 600, the image display device 110, 140 and 160, the image capture device 120 and 150, and the image printing device 130 in the above-described embodiments may be implemented by an integrated circuit of large scale integration (LSI) or the like. The respective functional blocks of the image display device, the image display device, the image capture device, and the image printing device may be separately formed of a processor, and some or all of the blocks may be formed as a processor. A technique for an integrated circuit is not limited to an LSI, and may be realized by a dedicated circuit or a general purpose processor. In addition, in a case where a technique for an integrated circuit replacing the LSI will appear with the advance of a semiconductor technique, an integrated circuit based on the technique may be used.

As mentioned above, although the embodiments of the present invention have been described in detail with reference to the drawings, a specific configuration is not limited to the embodiments, and design modifications and the like may occur within the scope without departing from the spirit of the invention.

### Industrial Applicability

The present invention is applicable to a liquid crystal television set, a mobile phone, a digital camera, a personal computer, a tablet type personal computer, a printer, and the like.

### Reference Signs List

- 100, 200, 300, 400, 500, 600: IMAGE PROCESSING DEVICE
- 101, 201, 301, 401, 5021: FIRST ILLUMINATION LIGHT DISTRIBUTION CALCULATION UNIT
- 102, 202, 302, 402, 5022: FIRST CORRECTION COEFFICIENT CALCULATION UNIT
- 103, 203, 303, 403, 5023: FIRST GRADATION CONVERSION UNIT
- 104, 204, 304, 404, 5024: SECOND ILLUMINATION LIGHT DISTRIBUTION CALCULATION UNIT
- 105, 205, 305, 405, 5025: SECOND CORRECTION COEFFICIENT CALCULATION UNIT
- 106, 206, 306, 406, 5026: SECOND GRADATION CONVERSION UNIT
- 110, 140, 160: IMAGE DISPLAY DEVICE
- 111: IMAGE DISPLAY UNIT
- 120, 150: IMAGE CAPTURE DEVICE
- 121, 151: IMAGING ELEMENT
- 122, 153: IMAGE STORAGE UNIT
- 130: IMAGE PRINTING DEVICE
- 131: IMAGE PRINTING UNIT
- 141, 152, 161: IMAGE DISPLAY UNIT
- 154: IMAGE CORRECTION UNIT
- 307: IMAGE ANALYSIS UNIT
- 308: CALCULATION METHOD STORAGE UNIT
- 309: CALCULATION METHOD SELECTION UNIT
- 407: INPUT UNIT
- 408: CALCULATION METHOD STORAGE UNIT
- 409: CALCULATION METHOD SELECTION UNIT
- 501, 601: ILLUMINATION DEVICE CONTROL UNIT
- 502, 602: IMAGE PROCESSING UNIT
- 503, 604: IMAGE ANALYSIS UNIT

## Claims

1. An image processing device comprising:
a first illumination light distribution calculation unit that calculates a brightness of each pixel of an input image in a first region which is a predetermined region centering on the pixel so as to calculate a first illumination light distribution indicating a distribution of illumination light intensities of the input image;
a first correction coefficient calculation unit that calculates a first correction coefficient which is a coefficient which monotonously decreases relative to the illumination light intensity in a case where the illumination light intensity is equal to or higher than a predetermined threshold value, for each pixel of the input image, on the basis of the first illumination light distribution;
a first gradation conversion unit that performs gradation conversion on the input image by converting a gradation value of each pixel of the input image by using the first correction coefficient;
a second illumination light distribution calculation unit that calculates a brightness of each pixel of an image having undergone the gradation conversion in the first gradation conversion unit in a second region smaller than the first region, centering on the pixel, so as to calculate a second illumination light distribution indicating a distribution of illumination light intensities of the input image;
a second correction coefficient calculation unit that calculates a second correction coefficient which is a coefficient which monotonously increases relative to the illumination light intensity, for each pixel of the image having undergone the gradation conversion in the first gradation conversion unit, on the basis of the second illumination light distribution; and
a second gradation conversion unit that performs gradation conversion on the image having undergone the gradation conversion in the first gradation conversion unit by converting a gradation value of each pixel of the image having undergone the gradation conversion in the first gradation conversion unit by using the second correction coefficient.

2. The image processing device according to Claim 1, wherein the first correction coefficient calculation unit calculates the first correction coefficient which is a coefficient which monotonously decreases relative to the illumination light intensity in a case where the illumination light intensity is equal to or higher than the predetermined threshold value and which monotonously increases relative to the illumination light intensity in a case where the illumination light intensity is lower than the predetermined threshold value, for each pixel of the input image, on the basis of the first illumination light distribution.

3. The image display device according to Claim 1 or 2, wherein the first correction coefficient calculation unit and the second correction coefficient calculation unit respectively calculate the first correction coefficient and the second correction coefficient such that an average value of gradations of an output image is greater than an average value of gradations of the input image.

4. The image processing device according to any one of Claims 1 to 3, wherein the first illumination light distribution calculation unit calculates a brightness of each pixel of an input image in a plurality of first regions larger than the second region, centering on the pixel, so as to calculate a plurality of first illumination light distributions,
wherein the first correction coefficient calculation unit calculates the first correction coefficient, for each pixel of the input image, on the basis of the plurality of first illumination light distributions,
wherein the second illumination light distribution calculation unit calculates a brightness of each pixel of an image having undergone the gradation conversion in the first gradation conversion unit in a plurality of second regions smaller than the first region, centering on the pixel, so as to calculate a plurality of second illumination light distributions, and
wherein the second correction coefficient calculation unit calculates the second correction coefficient, for each pixel of the image having undergone the gradation conversion in the first gradation conversion unit, on the basis of the plurality of second illumination light distributions.

5. The image processing device according to any one of Claims 1 to 3, wherein the first correction coefficient calculation unit calculates the first correction coefficient such that the first correction coefficient for a pixel of which the illumination light intensity is the maximum becomes 1, and
wherein the second correction coefficient calculation unit calculates the second correction coefficient such that the second correction coefficient for a pixel of which the illumination light intensity is the maximum becomes 1.

6. The image processing device according to any one of Claims 1 to 5, further comprising:
a calculation method storage unit that stores a plurality of calculation methods of the first correction coefficient and a plurality of calculation methods of the second correction coefficient; and
a calculation method selection unit that selects a single calculation method of the first correction coefficient and a single calculation method of the second correction coefficient among the calculation methods stored in the calculation method storage unit,
wherein the first correction coefficient calculation unit calculates the first correction coefficient by using the calculation method of the first correction coefficient selected by the calculation method selection unit, and
wherein the second correction coefficient calculation unit calculates the second correction coefficient by using the calculation method of the second correction coefficient selected by the calculation method selection unit.

7. The image processing device according to Claim 6, wherein the calculation method selection unit selects a single calculation method of the first correction coefficient and a single calculation method of the second correction coefficient among the calculation methods stored in the calculation method storage unit, in response to an instruction from a user.

8. The image processing device according to Claim 6, further comprising:
an image analysis unit that analyzes the input image or the image having undergone the gradation conversion in the first gradation conversion unit,
wherein the calculation method selection unit selects a single calculation method of the first correction coefficient and a single calculation method of the second correction coefficient among the calculation methods stored in the calculation method storage unit, on the basis of an analysis result from the image analysis unit.

9. An image display device comprising:
the image processing device according to Claim 1; and
an image display unit that displays an image having undergone the gradation conversion in the second gradation conversion unit.

10. The image display device according to Claim 9, wherein the first correction coefficient calculation unit and the second correction coefficient calculation unit respectively calculate the first correction coefficient and the second correction coefficient on the basis of a brightness of the image display unit.

11. The image display device according to Claim 9, wherein the image display unit includes an illumination portion that emits light,
wherein the first correction coefficient calculation unit and the second correction coefficient calculation unit respectively calculate the first correction coefficient and the second correction coefficient such that a product of the first correction coefficient and the second correction coefficient increases according to a decrease in an output coefficient, the output coefficient being a ratio of an amount of light emitted by the illumination portion to the maximum amount of light which can be emitted by the illumination portion.

12. An image capture device comprising:
the image processing device according to Claim 1; and
an imaging element that captures the input image.

13. An image printing device comprising:
the image processing device according to Claim 1; and
an image printing unit that prints the image having undergone the gradation conversion in the second gradation conversion unit.

14. A gradation conversion method comprising:
a step of calculating a brightness of each pixel of an input image in a first region which is a predetermined region centering on the pixel so as to calculate a first illumination light distribution indicating a distribution of illumination light intensities of the input image;
a step of calculating a first correction coefficient which is a coefficient which monotonously decreases relative to the illumination light intensity in a case where the illumination light intensity is equal to or higher than a predetermined threshold value, for each pixel of the input image, on the basis of the first illumination light distribution;
a step of performing gradation conversion on the input image by converting a gradation value of each pixel of the input image by using the first correction coefficient;
a step of calculating a brightness of each pixel of an image having undergone the gradation conversion in a second region smaller than the first region, centering on the pixel, so as to calculate a second illumination light distribution indicating a distribution of illumination light intensities of the input image;
a step of calculating a second correction coefficient which is a coefficient which monotonously increases relative to the illumination light intensity, for each pixel of the image having undergone the gradation conversion, on the basis of the second illumination light distribution; and
a step of performing gradation conversion on the image having undergone the gradation conversion by converting a gradation value of each pixel of the image having undergone the gradation conversion by using the second correction coefficient.

15. A program causing a computer to execute:
a step of calculating a brightness of each pixel of an input image in a first region which is a predetermined region centering on the pixel so as to calculate a first illumination light distribution indicating a distribution of illumination light intensities of the input image;
a step of calculating a first correction coefficient which is a coefficient which monotonously decreases relative to the illumination light intensity in a case where the illumination light intensity is equal to or higher than a predetermined threshold value, for each pixel of the input image, on the basis of the first illumination light distribution;
a step of performing gradation conversion on the input image by converting a gradation value of each pixel of the input image by using the first correction coefficient;
a step of calculating a brightness of each pixel of an image having undergone the gradation conversion in a second region smaller than the first region, centering on the pixel, so as to calculate a second illumination light distribution indicating a distribution of illumination light intensities of the input image;
a step of calculating a second correction coefficient which is a coefficient which monotonously increases relative to the illumination light intensity, for each pixel of the image having undergone the gradation conversion, on the basis of the second illumination light distribution; and
a step of performing gradation conversion on the image having undergone the gradation conversion by converting a gradation value of each pixel of the image having undergone the gradation conversion by using the second correction coefficient.
